# EUROPEAN PATENT APPLICATION

(11) **EP 4 818 540 A1**
(43) Date of publication of application: **07.10.2026**
(21) Application number: 24897404.0
(22) Date of filing: 20.11.2024
(51) Int. Cl.: F16C 33/78, F16C 19/06, F16C 33/41, F16J 15/28, F16J 15/3204

(54) **ROLLING BEARING AND ROTARY MACHINE**

(30) Priority: 29.11.2023 JP 2023201807; 08.03.2024 JP 2024035783
(71) Applicant: NTN Corporation, Osaka-shi, Osaka 530-0005 (JP)
(72) Inventor: SASAKI Katsuaki, Iwata-shi, Shizuoka 438-8510 (JP); TAKUBO Takayasu, Iwata-shi, Shizuoka 438-8510 (JP); MIYAIRI Susumu, Iwata-shi, Shizuoka 438-8510 (JP); SUGIYAMA Shogo, Iwata-shi, Shizuoka 438-8510 (JP); INAGAKI Wataru, Iwata-shi, Shizuoka 438-8510 (JP)
(74) Representative: Grünecker Patent- und Rechtsanwälte PartG mbB
(86) International application number: PCT/JP2024/041102
(87) International publication number: WO 2025/115718

(57) **Abstract**

One of two sealing members (7, 8) is an outer-ring-fixed sealing member (7) fixed to the inner periphery of an outer ring (2), and the other is an inner-ring-fixed sealing member (8) fixed to the outer periphery of an inner ring (3). An oil suppl gap (23) for introducing lubricating oil supplied from outside a bearing into a bearing space (4) is defined between the inner periphery of the outer-ring-fixed sealing member (7) and the outer periphery of the inner ring (3). An oil discharge gap (29) for discharging lubricating oil from the bearing space (4) is defined between the outer periphery of the inner-ring-fixed sealing member (8) and the inner periphery of the outer ring (2).

## Description

### TECHNICAL FIELD

The present invention relates to a rolling bearing and a rotary machine comprising the rolling bearing.

### BACKGROUND ART

### [Background of First Invention]

As a bearing that supports a rotary shaft of an automobile, an industrial machine, or the like, a rolling bearing is frequently used (for example, the below-identified Patent Documents 1 and 2). The rolling bearing disclosed in Patent Documents 1 and 2 includes an outer ring, an inner ring disposed radially inward of the outer ring, a plurality of rolling elements disposed in an annular bearing space defined between the outer ring and the inner ring, and two sealing members that cover one axial end opening and the other axial end opening of the bearing space, respectively.

In the rolling bearing disclosed in Patent Document 1, an arrangement is used in which both of the two sealing members are outer-ring-fixing sealing members fixed to the inner periphery of the outer ring, and a labyrinth clearance is defined between the inner periphery of each outer-ring-fixing sealing member and the outer periphery of the inner ring. In this rolling bearing, the interior of the bearing is lubricated by introducing lubricating oil supplied from outside the bearing, into the bearing space through the labyrinth clearance, defined between the inner periphery of each outer-ring-fixing sealing member and the outer periphery of the inner ring.

On the other hand, in the rolling bearing disclosed in Patent Document 2, an arrangement is used in which both of the two sealing members are inner-ring-fixing sealing members fixed to the outer periphery of the inner ring, and a radial gap is defined between the outer periphery of each inner-ring-fixing sealing member and the inner periphery of the outer ring. In this rolling bearing, since the two sealing members are inner-ring-fixing sealing members that rotate in unison with the inner ring, lubricating oil inside the bearing moves radially outward due to centrifugal force, and is discharged outside the bearing through the radial gap, defined between the outer periphery of each inner-ring-fixing sealing member and the inner periphery of the outer ring. Accordingly, lubricating oil is less likely to remain within the bearing, thereby reducing churning resistance of the lubricating oil within the bearing.

### [Background of Second Invention]

The rolling bearing includes an inner member having a first raceway surface, an outer member having a second raceway surface, a plurality of rolling elements disposed between these raceway surfaces, and a cage retaining these rolling elements.

When an amount of oil not less than a predetermined amount is present in the entrance of elastohydrodynamic contact between the rolling elements and the raceway surfaces during high-speed rotation of the rolling bearing, sufficient lubrication is achieved, in which the oil film thickness does not further increase. If the amount of oil supplied to the rolling bearing becomes insufficient during high-speed rotation, it is known that starved lubrication (starvation) occurs, in which the oil film thickness between the rolling elements and the raceway surfaces gradually decreases, thereby reducing rolling viscous resistance (the below-identified Non-Patent Documents 1 to 3).

If the rolling bearing is rotated at high speed in an oil lubrication system, an open bearing that does not include a seal or shield is generally used, as in experimental examples of Non-Patent Documents 1 and 2, in which the inner member is disposed on the rotary part side of the rotary machine, the outer member is disposed on the housing side of the rotary machine, and an oil supply portion for supplying oil to a lateral side of the rolling bearing is provided in the rotary machine.

In the experimental examples of the open bearing disclosed in Non-Patent Documents 1 and 2, it is shown that if the amount of oil supplied is 70 ml/min or 100 ml/min, sufficient lubricant is maintained until the highest bearing rotational speed under the experimental conditions is reached, whereas if the amount of oil supplied is 40 ml/min, starvation occurs at a bearing rotational speed lower than the highest bearing rotational speed under the experimental conditions.

In an air-oil lubrication system used for a main shaft of the machine tool, since the oil supply portion is capable of accurately and independently controlling a small amount of oil supplied, by adjusting the amount of oil supplied according to the bearing rotational speed, a starvation state can be stabilized to an extent that the oil film between the rolling elements and the raceway surfaces does not break, thereby positively reducing the frictional torque. Non-Patent Document 3 discloses a calculation method for theoretically estimating frictional torque under a small amount of oil supplied, as in an air-oil lubrication system.

### PRIOR ART DOCUMENT(S)

### PATENT DOCUMENT(S)

Patent Document 1: Japanese Unexamined Patent Application Publication No. 2013-060957
Patent Document 2: DE 10 2020 112 044 A1

### NON-PATENT DOCUMENT(S)

Non-Patent Document 1: Toyama, "Lubrication Analysis of High-speed Deep Groove Ball Bearings (Part 1) - Evaluation of the Effect of Supplied Oil Amount by Lubrication Visualization", Proceedings of the Tribology Conference 2023 Spring, Tokyo, pp. 240-244

Non-Patent Document 2: Toyama, "Lubrication Analysis of High-speed Deep Groove Ball Bearings (Part 2) - Evaluation of the Effect of Supplied Oil Amount by Lubrication Visualization", Proceedings of the Tribology Conference 2023 Spring, Tokyo, pp. 245-246

Non-Patent Document 3: Fujiwara, "Estimation Method for Friction Torque of Air-oil Lubricated Angular Contact Ball Bearings, Lubrication Analysis of High-speed Deep Groove Ball Bearing (Part 1) - Evaluation of the Effect of Supplied Oil Amount by Lubrication Visualization", NTN TECHNICAL REVIEW No. 82 (2014), pp 54-60

### SUMMARY OF THE INVENTION

### PROBLEMS TO BE SOLVED BY THE INVENTION

### [Problem of First Invention]

In recent years, in the field of electric vehicles such as EVs (battery electric vehicles) or HEVs (hybrid electric vehicles), electric motors have been operated at increasingly higher rotational speeds in order to achieve reductions in the size and weight of the electric motors.

If the rolling bearing disclosed in Patent Document 1 is used in such high-speed rotational applications, there is a problem in that lubricating oil introduced through the labyrinth clearance between the inner periphery of the outer-ring-fixing sealing member and the outer periphery of the inner ring tends to remain within the bearing, and the rotational resistance of the bearing is increased due to churning resistance caused by the lubricating oil remaining within the bearing.

In order to reduce churning resistance of the lubricating oil within the bearing, it is considered to use the rolling bearing disclosed in Patent Document 2. However, if the rolling bearing disclosed in Patent Document 2 is used in high-speed rotational applications, lubricating oil within the bearing is discharged to the outside due to centrifugal force through the radial gap between the outer periphery of the inner-ring-fixing sealing member and the inner periphery of the outer ring, thereby causing a shortage of lubricating oil within the bearing. As a result, there is a risk that abnormal heat generation, peeling damage, seizure, and the like may occur.

It is an object of the first invention to provide a rolling bearing in which a shortage of lubricating oil within the bearing is less likely to occur during high-speed rotation and in which churning resistance of lubricating oil within the bearing can be reduced.

### [Problem of Second Invention]

With increasing emphasis on energy efficiency, rolling bearings are required to exhibit low torque, and therefore the amount of oil supplied is limited to a small amount to reduce churning resistance. If a small amount of oil is supplied from the sides of the open bearing, a small amount of oil is mixed with an ambient atmosphere around the bearing and then enters the bearing, and therefore an air curtain is formed on both sides of the open bearing during high-speed rotation. The air curtain is a phenomenon in which a lubricating fluid such as oil spreads laterally while swirling circumferentially due to churning of the lubricating fluid caused by a cage rotating about its own axis at high speed or a plurality of rolling elements revolving around the axis of the cage at high speed. If the momentum of air curtain is strong, oil supplied to the sides of the open bearing is less likely to penetrate through an annular space of the rolling bearing, and the amount of oil contributing to lubrication and cooling of the rolling elements and other components is gradually reduced, thereby causing starvation.

However, in application fields where failure resistance of rolling bearings is emphasized, higher-speed rotational operation under sufficient lubrication may be demanded. In a rotary machine including an oil supply portion capable of accurately controlling a small amount of oil supplied as in an air-oil lubrication system, by increasing the amount of oil supplied from the oil supply portion based on control in view of increase in the bearing rotational speed and an effect of the air curtain, sufficient lubrication can be maintained. However, in some cases, it is not possible to use such an oil supply portion having a control function. For example, in an electric axle unit (so-called e-Axles) in which an electric motor for vehicle propulsion, a gear reducer, and an inverter are integrated, since the rotational speed during operation differs significantly between a motor shaft or an input shaft of the gear reducer and a transmission shaft of a second or subsequent stage, a desirable amount of oil supplied differs between a rolling bearing that supports a high-speed shaft such as the input shaft and a rolling bearing that supports the transmission shaft of the second or subsequent stage. Providing a dedicated oil supply portion having a control function for oil lubrication of the rolling bearing that supports a high-speed shaft is unacceptable because it results in an increase in size and complexity of the unit. In such an application environment, it is not possible to meet demands for higher-speed rotational operation by increasing the bearing rotational speed at which starvation occurs (that is, the upper limit of the bearing rotational speed at which sufficient lubrication can be maintained).

In view of the above background, it is an object of the second invention to increase the bearing rotational speed at which starvation occurs, without increasing the size and complexity of an electric axle unit or the like.

### MEANS FOR SOLVING THE PROBLEMS

In order to achieve the above object, the first invention provides a rolling bearing comprising the following arrangements.

### [Arrangement 1]

A rolling bearing comprising:
an outer ring;
an inner ring disposed radially inward of the outer ring;
a plurality of rolling elements disposed in an annular bearing space defined between the outer ring and the inner ring;
two sealing members covering a first axial end opening and a second axial end opening of the bearing space, respectively,
characterized in that one of the two sealing members is an outer-ring-fixed sealing member fixed to an inner periphery of the outer ring, and the other of the two sealing members is an inner-ring-fixed sealing member fixed to an outer periphery of the inner ring,
wherein an oil discharge gap for discharging lubricating oil from the bearing space is defined between an outer periphery of the inner-ring-fixed sealing member and the inner periphery of the outer ring, and
wherein an oil supply gap for introducing lubricating oil supplied from outside the bearing into the bearing space is defined between an inner periphery of the outer-ring-fixed sealing member and the outer periphery of the inner ring.

With this arrangement, since the inner-ring-fixed sealing member rotates in unison with the inner ring, lubricating oil within the bearing moves radially outward due to centrifugal force and discharged to the outside of the bearing through the oil discharge gap between the outer periphery of the inner-ring-fixed sealing member and the inner periphery of the outer ring. Accordingly, lubricating oil is less likely to remain within the bearing, thereby enabling churning resistance of lubricating oil within the bearing to be reduced.

In addition, since the outer-ring-fixed sealing member does not rotate even when the inner ring rotates, as lubricating oil within the bearing is discharged through the oil discharge gap due to centrifugal force, lubricating oil supplied from outside the bearing can be drawn into the bearing through the oil supply gap between the inner periphery of the outer-ring-fixed sealing member and the outer periphery of the inner ring. Accordingly, shortage of lubricating oil within the bearing during high-speed rotation is less likely to occur, and stable lubrication within the bearing can be achieved.

Further, due to simultaneous occurrence of discharge of lubricating oil within the bearing to the outside of the bearing through the oil discharge gap between the outer periphery of the inner-ring-fixed sealing member and the inner periphery of the outer ring, and drawing in of lubricating oil supplied from outside the bearing into the bearing through the oil supply gap between the inner periphery of the outer-ring-fixed sealing member and the outer periphery of the inner ring, lubricating oil within the bearing is continuously exchanged, thereby ensuring smooth heat exchange in the bearing. Accordingly, temperature rise during high-speed rotation can be effectively prevented.

### [Arrangement 2]

The rolling bearing according to the arrangement 1, wherein the outer-ring-fixed sealing member includes a rubber seal lip provided with a plurality of protrusions circumferentially spaced apart from each other, the plurality of protrusions being in sliding contact with the outer periphery of the inner ring via an oil film, and
wherein the oil supply gap is defined between each circumferentially adjacent pair of the protrusions.

With this arrangement, since the oil supply gap is defined between each circumferentially adjacent pair of the protrusions of the seal lip, the dimension of the oil supply gap can be controlled with a high degree of accuracy by adjusting heights of the protrusions of the seal lip. Accordingly, the oil supply gap can be set to a small dimension, thereby effectively preventing foreign matter from entering the bearing from outside the bearing through the oil supply gap.

### [Arrangement 3]

The rolling bearing according to the arrangement 2, wherein the outer periphery of the inner ring is formed with a cylindrical seal sliding contact surface extending axially from a portion with which the seal lip is in sliding contact and connecting to an axial end surface of the inner ring.

With this arrangement, since the seal sliding contact surface of the outer periphery of the inner ring has a cylindrical shape extending axially from a portion with which the seal lip is in sliding contact and connecting to an axial end surface of the inner ring, the oil supply gap between the seal lip and the inner ring is significantly exposed to the exterior of the bearing compared to an arrangement in which the seal lip is in sliding contact with the inner surface of a recess groove. Accordingly, lubricating oil supplied from outside the bearing can be smoothly introduced into the oil supply gap.

### [Arrangement 4]

The rolling bearing according to the arrangement 3, wherein the outer periphery of the inner ring is formed with a cylindrical seal fixing surface to which a radially inner end of the inner-ring-fixed sealing member is fixedly fitted, and
wherein the seal fixing surface and the seal sliding contact surface are equal in outer diameter and are symmetrical in shape with each other, whereby the inner ring is symmetrical with respect to a plane perpendicular to an axial direction.

With this arrangement, the seal fixing surface and the seal sliding contact surface can be formed by machining in the same process when manufacturing the inner ring, thereby reducing the manufacturing cost. In addition, when assembling the rolling bearing, it is unnecessary to distinguish between the front and back orientations of the inner ring, thereby achieving excellent workability.

### [Arrangement 5]

The rolling bearing according to any one of the arrangements 1 to 4, wherein a metal shield plate that does not come into contact with the inner periphery of the outer ring is used as the inner-ring-fixed sealing member.

With this arrangement, since the inner-ring-fixed sealing member does not come into contact with the inner periphery of the outer ring, rotational resistance of the bearing can be reduced.

### [Arrangement 6]

The rolling bearing according to any one of the arrangements 1 to 5, wherein the inner-ring-fixed sealing member includes:
a tubular fitting portion fitted to the outer periphery of the inner ring;
an annular plate portion rising radially outward from the tubular fitting portion; and
a bent edge portion bent axially inward at a radially outer end of the annular plate portion.

With this arrangement, since the inner-ring-fixed sealing member includes a bent edge portion bent axially inward at the radially outer end of the annular plate portion, when lubricating oil drawn into the bearing through the oil supply gap between the inner periphery of the outer-ring-fixing sealing member and the outer periphery of the inner ring moves radially outward due to centrifugal force, a portion of the lubricating oil is received by the bent edge portion of the inner-ring-fixed sealing member before reaching the oil discharge gap between the outer periphery of the inner-ring-fixed sealing member and the inner periphery of the outer ring, thereby allowing the lubricating oil to remain within the bearing. Accordingly, lubricating oil drawn into the bearing through the oil supply gap can be prevented from being excessively discharged through the oil discharge gap.

### [Arrangement 7]

The rolling bearing according to the arrangement 6, wherein the inner periphery of the outer ring is formed with a circumferential groove extending circumferentially at a position corresponding to the inner-ring-fixed sealing member, and
wherein at least a portion of the bent edge portion of the inner-ring-fixed sealing member is received in the circumferential groove.

With this arrangement, since at least a portion of the bent edge portion of the inner-ring-fixed sealing member is received in the circumferential groove on the inner periphery of the outer ring, lubricating oil within the bearing that moves along the inner periphery of the outer ring toward the inner-ring-fixed sealing member can be effectively received by the bent edge portion. Accordingly, lubricating oil within the bearing can be effectively prevented from being excessively discharged through the oil discharge gap.

### [Arrangement 8]

The rolling bearing according to the arrangement 7, wherein the inner periphery of the outer ring is formed with a seal fixing groove in which a radially outer end of the outer-ring-fixed sealing member is fixedly fitted, and
wherein a cross-sectional shape of the seal fixing groove and a cross-sectional shape of the circumferential groove are symmetrical with each other, whereby the outer ring is symmetrical with respect to a plane perpendicular to the axial direction.

With this arrangement, the seal fixing groove and the circumferential groove can be formed by machining in the same process when manufacturing the outer ring, thereby reducing the manufacturing cost. In addition, when assembling the rolling bearing, it is unnecessary to distinguish between the front and back orientations of the outer ring, thereby achieving excellent workability.

### [Arrangement 9]

The rolling bearing according to any one of the arrangements 1 to 8, wherein grease is sealed in the bearing space.

With this arrangement, lubrication within the bearing can be ensured during initial use of the bearing until lubricating oil is supplied from outside the bearing.

In addition, in order to achieve the above object, the second invention provides a rolling bearing comprising the following arrangements.

### [Arrangement 10]

A rolling bearing comprising:
an inner member having a first raceway surface;
an outer member having a second raceway surface;
a plurality of rolling elements disposed between the first raceway surface and the second raceway surface; and
a cage retaining the rolling elements,
characterized in that the rolling bearing further comprises:
   a shield extending relative to a radially inner surface of the outer member toward a radially outer surface of the inner member at a position displaced relative to the rolling elements and the cage toward a first axial side; and
   a slinger extending relative to the radially outer surface of the inner member toward the radially inner surface of the outer member at a position displaced relative to the rolling elements and the cage toward a second axial side opposite from the first axial side,
   wherein a first oil port is defined between the shield and the inner member, and
   wherein a second oil port is defined between the slinger and the outer member.

With this arrangement, during rotation of a rolling bearing in which the inner member rotates, a lubricating fluid such as oil that is agitated by the rolling elements and the cage and moves toward the first axial side is received by the shield, thereby reducing an effect of the air curtain on the side surface of the rolling bearing on the first axial side and facilitating oil supplied to the first axial side of the rolling bearing to reach the first oil port between the shield and the inner member. On the second axial side of the rolling bearing, the slinger subjects oil that has lubricated and cooled the rolling elements to centrifugal action to promote discharge of the oil through the second oil port between the outer member and the slinger, thereby reducing back pressure of the second oil port relative to the first oil port and facilitating drawing in of oil through the first oil port. By reducing the effect of the air curtain on the first axial side while promoting discharge of the oil on the second axial side of the rolling bearing, reverse flow of oil through the first oil port can be prevented, thereby exhibiting a centrifugal pumping action that draws oil into the bearing through the first oil port and discharges, through the second oil port, the oil that has lubricated and cooled the rolling elements and the like. An increase in the bearing rotational speed enhances the centrifugal pumping action. Thus, by providing the rolling bearing with the shield and the slinger for generating an effective centrifugal pumping action during high-speed rotation, the bearing rotational speed at which starvation occurs can be increased by the rolling bearing itself, without requiring an increase in size or complexity of an electric axle unit or the like.

### [Arrangement 11]

The rolling bearing according to the arrangement 10, wherein the cage includes an annular portion extending circumferentially on the second axial side of the rolling elements, and
wherein the slinger includes a side plate portion axially opposed to and axially spaced apart from, a side surface of the annular portion on the second axial side.

With this arrangement, oil is guided into the space between the annular portion of the cage and the side plate portion of the slinger, centrifugal action is exerted on the oil by both portions so as to prevent the oil from escaping from the space, whereby the oil can be fed to the second oil port.

### [Arrangement 12]

The rolling bearing according to the arrangement 11, wherein the slinger further includes a tubular plate portion fitted to the inner member so as to be radially opposed to the annular portion and be radially spaced apart from the annular portion,
wherein the side plate portion extends radially outward from the second axial side of the tubular plate portion, and
wherein a radial gap between the tubular plate portion and the annular portion is smaller than an axial gap between the side surface of the annular portion on the second axial side and the side plate portion.

With this arrangement, oil is less likely to pass through the space between the annular portion of the cage and the tubular plate portion of the slinger, so that oil can be more readily supplied to the rolling elements through the space between the inner periphery of the cage and the inner member, where the oil tends to become relatively scarce during high-speed rotation of the rolling bearing.

### [Arrangement 13]

The rolling bearing according to the arrangement 11 or 12, wherein a radial gap between an outer peripheral edge of the side plate portion and the outer member is larger than the axial gap between the side surface of the annular portion on the second axial side and the side plate portion.

With this arrangement, oil that has passed through the space between the annular portion of the cage and the side plate portion of the slinger can be more readily discharged through the second oil port.

### [Arrangement 14]

The rolling bearing according to the arrangement 13, wherein the outer member includes:
a shoulder portion radially opposed to the annular portion and radially spaced apart from the annular portion; and
a cutout portion having a diameter larger than a diameter of the shoulder portion at a position radially opposed to the side plate portion, and
wherein the side plate portion has an outer diameter smaller than the diameter of the shoulder portion.

With this arrangement, the second oil port can be radially enlarged by the cutout portion of the outer member, thereby avoiding the need to reduce the diameter of the side plate portion of the slinger, and oil that has passed through the space between the outer member and the outer periphery of the cage can be more readily guided toward the second oil port.

### [Arrangement 15]

The rolling bearing according to any one of the arrangements 10 to 14, wherein the shield has an inner diameter not greater than an inner diameter of the cage.

With this arrangement, since the entire cage and a large portion of the rolling elements are covered by the shield from the first axial side, most of the oil that is agitated by the cage and the rolling elements and moves toward the first axial side can be received by the shield, thereby preventing oil from flowing back through the first oil port.

### [Arrangement 16]

The rolling bearing according to any one of the arrangements 10 to 15, wherein the cage is located farther from the shield toward the second axial side than the rolling elements.

With this arrangement, since a large space is provided between the shield and the rolling elements, oil can diffuse within the space and the oil can more easily reach the rolling elements.

### [Arrangement 17]

The rolling bearing according to any one of the arrangements 10 to 16, wherein the shield includes:
a distal end plate portion that is a portion of the shield closest to the inner member; and
a radially inner tapered plate portion extending obliquely radially outward from the first axial side of the distal end plate portion.

With this arrangement, it is possible to more easily enter oil supplied to the rolling bearing toward the first axial side into the first oil port, and to facilitate oil received by the shield reaching the rolling elements.

### [Arrangement 18]

The rolling bearing according to any one of the arrangements 10 to 17, wherein the cage is a resin member including the annular portion, which extends circumferentially; and plural pairs of claw portions extending from the annular portion toward the first axial side so as to define spaces that are open to a radially inner side, a radially outer side and the first axial side,
wherein the rolling elements are balls disposed in the respective spaces,
wherein a portion of the cage between two of the claw portions that are located between each circumferentially adjacent pairs of the rolling elements is recessed toward the second axial side so as to form a recessed portion, and
wherein inequalities a > b and c > 0 are satisfied, where a represents a minimum axial thickness of a portion of the cage between (i) a recessed end surface located at an axial end of the recessed portion on the second axial side and (ii) the side surface of the cage on the second axial side, b represents an axial thickness of a portion of the cage between (i) a pocket bottom of each of the spaces at an axial end of the space on the second axial side and (ii) the side surface of the cage on the second axial side, and c represents a minimum distance between (i) an imaginary plane passing through centers of the rolling elements and (ii) the recessed end surface.

With this arrangement, since deformation of the cage due to centrifugal force during high-speed rotation is reduced, the rolling bearing can be used as a ball bearing suitable for high-speed rotation applications.

### [Arrangement 19]

A rotary machine comprising:
the rolling bearing according to any one of the arrangements 10 to 18;
a rotary part supported by the rolling bearing; and
an oil supply portion for supplying oil to the first axial side of the rolling bearing.

With this arrangement, since oil is drawn into the bearing through the first oil port during high-speed rotation of the rolling bearing, the bearing rotational speed at which starvation occurs can be increased even without an oil supply portion capable of accurately controlling an amount of oil supplied, thereby enabling high-speed operation of the rotary part.

### EFFECTS OF THE INVENTION

According to the rolling bearing of the first invention, since the inner-ring-fixed sealing member rotates in unison with the inner ring, lubricating oil within the bearing moves radially outward due to centrifugal force and discharged to the outside of the bearing through the oil discharge gap between the outer periphery of the inner-ring-fixed sealing member and the inner periphery of the outer ring. Accordingly, lubricating oil is less likely to remain within the bearing, and this reduces churning resistance of lubricating oil within the bearing.

In addition, since the outer-ring-fixed sealing member does not rotate even when the inner ring rotates, as lubricating oil within the bearing is discharged through the oil discharge gap due to centrifugal force, lubricating oil supplied from outside the bearing can be drawn into the bearing through the oil supply gap between the inner periphery of the outer-ring-fixed sealing member and the outer periphery of the inner ring. Accordingly, shortage of lubricating oil within the bearing during high-speed rotation is less likely to occur, and stable lubrication within the bearing can be achieved.

Further, due to simultaneous occurrence of (1) discharge of lubricating oil within the bearing to the outside of the bearing through the oil discharge gap between the outer periphery of the inner-ring-fixed sealing member and the inner periphery of the outer ring, and (2) drawing in of lubricating oil supplied from outside the bearing into the bearing through the oil supply gap between the inner periphery of the outer-ring-fixed sealing member and the outer periphery of the inner ring, lubricating oil within the bearing is continuously exchanged, thereby ensuring smooth heat exchange in the bearing. Accordingly, temperature rise during high-speed rotation can be effectively prevented.

According to the second invention, the bearing rotational speed at which starvation occurs is increased without requiring an increase in size or complexity of an electric axle unit or the like.

### BRIEF DESCRIPTION OF THE DRAWINGS

Fig. 1 is a sectional view illustrating a rolling bearing according to an embodiment of the first invention.
Fig. 2 is an enlarged sectional view illustrating the outer-ring-fixed sealing member in Fig. 1, and the vicinity thereof.
Fig. 3 is a sectional view taken along line III-III in Fig. 1
Fig. 4 is an enlarged sectional view illustrating the inner-ring-fixed sealing member in Fig. 1, and the vicinity thereof.
Fig. 5 is a diagram illustrating a variation of a bent edge portion of the inner-ring-fixed sealing member shown in Fig. 4.
Fig. 6 is a diagram illustrating another variation of a bent edge portion of the inner-ring-fixed sealing member shown in Fig. 4.
Fig. 7 is a diagram illustrating yet another variation of a bent edge portion of the inner-ring-fixed sealing member shown in Fig. 4.
Fig. 8 is a diagram illustrating yet another variation of a bent edge portion of the inner-ring-fixed sealing member shown in Fig. 4.
Fig. 9 is a diagram illustrating yet another variation of a bent edge portion of the inner-ring-fixed sealing member shown in Fig. 4.
Fig. 10 is a diagram illustrating yet another variation of a bent edge portion of the inner-ring-fixed sealing member shown in Fig. 4.
Fig. 11 is a sectional view taken along line XI-XI in Fig. 1.
Fig. 12 is a diagram illustrating a state in which the rolling bearing shown in Fig. 1 is mounted on a housing and supports a rotary shaft.
Fig. 13 is a longitudinal sectional front view illustrating a rolling bearing according to an embodiment of the second invention and a portion of a rotary machine including the rolling bearing.
Fig. 14 is a left-side view illustrating the cage in Fig. 13.
Fig. 15 is a sectional view taken along line XV-XV in Fig. 14.

### BEST MODE FOR CARRYING OUT THE INVENTION

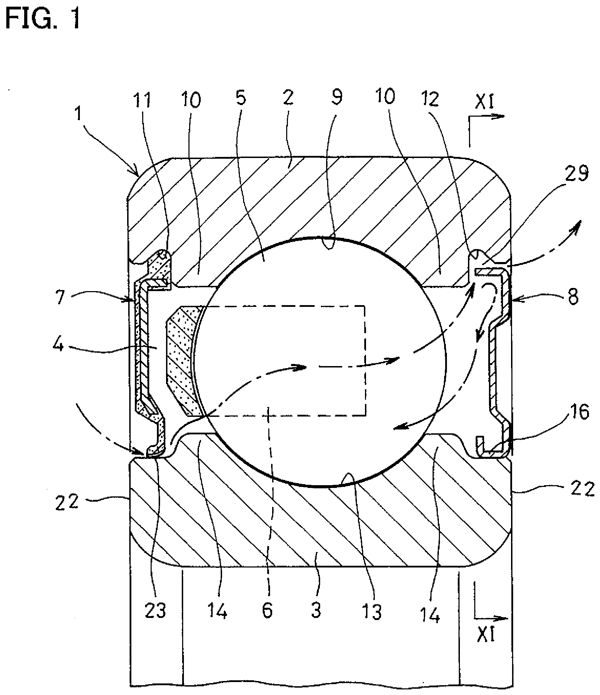

Fig. 1 illustrates a rolling bearing 1 according to an embodiment of the first invention. This rolling bearing 1 includes an outer ring 2; an inner ring 3 disposed radially inward of the outer ring 2 and coaxially with the outer ring 2; a plurality of rolling elements 5 that are disposed in an annular bearing space 4 defined between the outer ring 2 and inner ring 3 and that are circumferentially spaced apart from each other; a cage 6 that retains the circumferential gaps between the rolling elements 5; and two sealing members 7 and 8 that cover one axial end opening and the other axial end opening of the bearing space 4, respectively. One of the two sealing members 7 and 8 is an outer-ring-fixed sealing member 7 fixed to the inner periphery of the outer ring 2, and the other is an inner-ring-fixed sealing member 8 fixed to the outer periphery of the inner ring 3. Grease for initial lubrication is sealed in the bearing space 4.

The inner periphery of the outer ring 2 is formed with an outer ring raceway groove 9 with which the rolling elements 5 are in rolling contact; two outer ring shoulder portions 10 located axially outward of the outer ring raceway groove 9; a seal fixing groove 11 located axially outward of one (left-side outer ring shoulder portion 10 in the drawing) of the two outer ring shoulder portions 10; and a circumferential groove 12 located axially outward of the other (right-side outer ring shoulder portion 10) of the two outer ring shoulder portions 10. The outer ring raceway groove 9 is a circular-arc groove having a concave circular arc-shaped cross section along the surfaces of the rolling elements 5, and extends circumferentially at the axial center of the inner periphery of the outer ring 2. The two outer ring shoulder portions 10 are ridge-shaped portions extending circumferentially and disposed on both axial sides of the outer ring raceway groove 9, respectively. The radially outer end of the outer-ring-fixed sealing member 7 is fixedly fitted in the seal fixing groove 11.

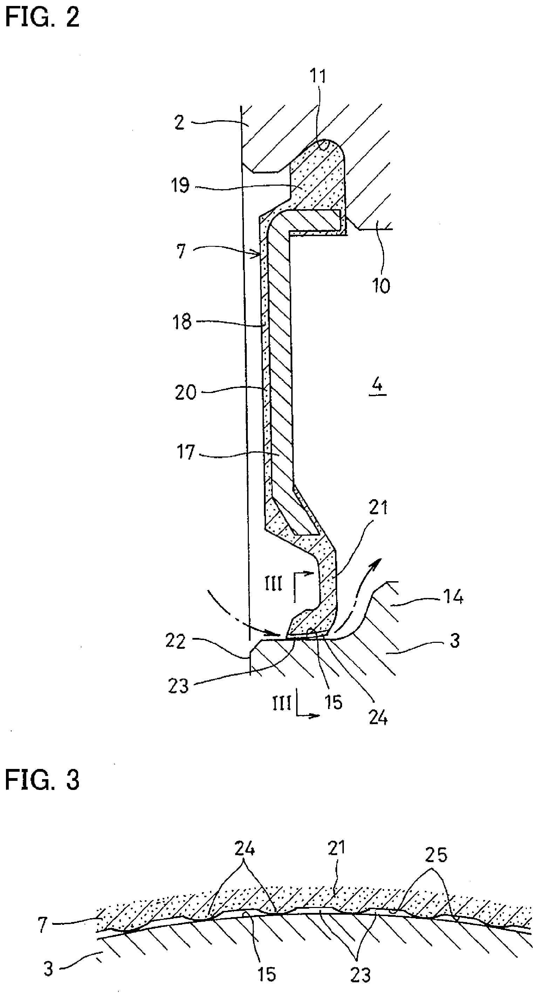

The outer periphery of the inner ring 3 is formed with an inner ring raceway groove 13 with which the rolling elements 5 are in rolling contact; two inner ring shoulder portions 14 located axially outward of the inner ring raceway groove 13; a seal sliding contact surface 15 (see Fig. 2) located axially outward of one (left-side inner ring shoulder portion 14 in the drawing) of the two inner ring shoulder portions 14; and a seal fixing surface 16 located axially outward of the other (right-side inner ring shoulder portion 14) of the two inner ring shoulder portions 14. The inner ring raceway groove 13 is a circular-arc groove having a concave circular arc-shaped cross section along the surfaces of the rolling elements 5, and extends circumferentially at the axial center of the outer periphery of the inner ring 3.The two inner ring shoulder portions 14 are ridge-shaped portions extending circumferentially and disposed on both axial sides of the inner ring raceway groove 13, respectively. The radially inner end of the inner-ring-fixed sealing member 8 is fixedly fitted to the seal fixing surface 16.

The rolling elements 5 are radially sandwiched between the outer ring raceway groove 9 and the inner ring raceway groove 13. This rolling bearing 1 is a deep-groove ball bearing. Specifically, the outer ring raceway groove 9 is a circular-arc groove symmetrical with respect to the axial center of the outer ring 2, and the inner ring raceway groove 13 is likewise a circular-arc groove symmetrical with respect to the axial center of the inner ring 3.

As shown in Fig. 2, the outer-ring-fixed sealing member 7 comprises a circular-annular plate-shaped metal core 17 and a rubber member 18 bonded to the metal core 17 by vulcanization. The metal core 17 is formed by pressing a steel plate such as a cold-rolled steel plate or a stainless steel plate. The rubber member 18 includes an outer peripheral rubber portion 19 extending radially outward from the radially outer end of the metal core 17, an outer surface rubber portion 20 that covers the entire axially outer side surface of the metal core 17, and a seal lip 21 extending radially inward from the radially inner end of the metal core 17.

The outer peripheral rubber portion 19 is fitted in the seal fixing groove 11 on the inner periphery of the outer ring 2. The seal lip 21 is in sliding contact with the seal sliding contact surface 15 on the outer periphery of the inner ring 3. The seal sliding contact surface 15 is a cylindrical surface that extends axially while having a constant outer diameter from a portion with which the seal lip 21 is in sliding contact and that connects to an axial end surface 22 of the inner ring 3. Oil supply gaps 23 through which lubricating oil supplied from outside the bearing is introduced into the bearing space 4 are defined between the inner periphery of the seal lip 21 and the seal sliding contact surface 15.

As shown in Fig. 3, the inner periphery of the seal lip 21 is provided with a plurality of protrusions 24 circumferentially spaced apart from each other, and lip inner peripheral surface portions 25 connecting the respective circumferentially adjacent pairs of protrusions 24. The protrusions 24 are arranged at equal pitches around the entire circumference of the inner periphery of the seal lip 21. The height of each protrusion 24 (distance from each lip inner peripheral surface portion 25 to the seal sliding contact surface 15 in a state in which the distal ends of the protrusions 24 are in contact with the seal sliding contact surface 15) is set to 0.1 mm or less. Each protrusion 24 is formed to extend in a direction intersecting with the circumferential direction (for example, a direction perpendicular to the circumferential direction (direction orthogonal to the sheet surface in the drawing)). The oil supply gaps 23 are gaps defined between the respective circumferentially adjacent pairs of protrusions 24.

Each protrusion 24 is formed such that its cross section taken along the circumferential direction has a convex circular-arc shape, and is in sliding contact with the seal sliding contact surface 15 via an oil film generated by a hydrodynamic wedge effect. Specifically, when the seal sliding contact surface 15 on the outer periphery of the inner ring 3 moves circumferentially relative to the protrusion 24, lubricating oil that is present between the circumferentially adjacent protrusions 24 is introduced between the protrusions 24 and the seal sliding contact surface 15 along the surfaces of the protrusions 24. At this time, due to a hydrodynamic wedge effect, hydrodynamic lubrication is established between the protrusions 24 and the seal sliding contact surface 15, thereby reducing sliding contact resistance of the seal lip 21 (seal torque).

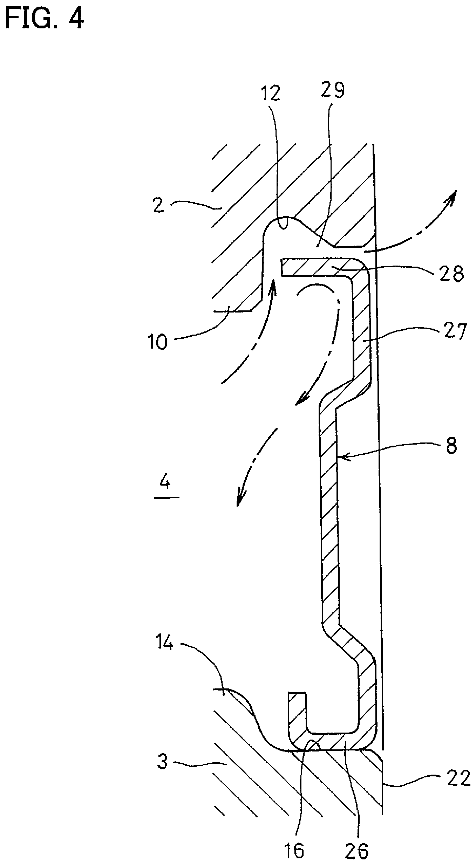

As shown in Fig. 4, the inner-ring-fixed sealing member 8 is a metal shield plate formed by pressing a metal plate (for example, a steel plate), and is not in contact with the inner periphery of the outer ring 2. The inner-ring-fixed sealing member 8 includes a tubular fitting portion 26 fitted on the outer periphery of the inner ring 3, an annular plate portion 27 rising radially outward from the tubular fitting portion 26, and a bent edge portion 28 bent axially inward (bent toward the left side in the drawing) at the radially outer end of the annular plate portion 27.

The tubular fitting portion 26 is fixedly fitted to the seal fixing surface 16 on the outer periphery of the inner ring 3 with an interference fit. The seal fixing surface 16 is a cylindrical surface that extends axially while having a constant outer diameter and that connects to an axial end surface 22 of the inner ring 3. The seal fixing surface 16 has a diameter equal to that of the seal sliding contact surface 15 (see Fig. 2), and is symmetrical with the seal sliding contact surface 15. As a result, as shown in Fig. 1, the inner ring 3 is symmetrical with respect to an imaginary plane extending perpendicularly to the axial direction and passing through the axial center of the inner ring 3.

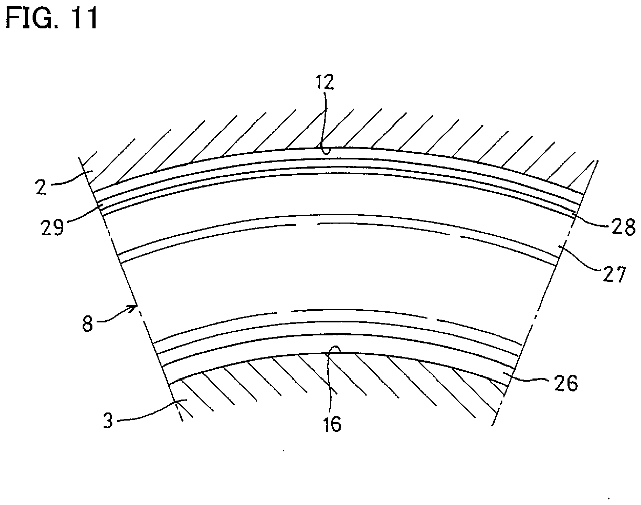

The circumferential groove 12 on the inner periphery of the outer ring 2 extends circumferentially at a position corresponding to the inner-ring-fixed sealing member 8, and at least a portion (entire portion in the shown example) of the bent edge portion 28 is received in the circumferential groove 12. The bent edge portion 28 is a cylindrical portion extending axially inward from the radially outer end of the annular plate portion 27, and has an inner diameter larger than that of the outer ring shoulder portion 10. An oil discharge gap 29 for discharging lubricating oil from the bearing space 4 is defined between the outer periphery of the bent edge portion 28 and the inner periphery of the outer ring 2. The oil discharge gap 29 is a minute annular gap (see Fig. 11).

The circumferential groove 12 has a cross section symmetrical with the cross section of the seal fixing groove 11 (see Fig. 3). As a result, as shown in Fig. 1, the outer ring 2 is symmetrical with respect to an imaginary plane extending perpendicularly to the axial direction and passing through the axial center of the outer ring 2.

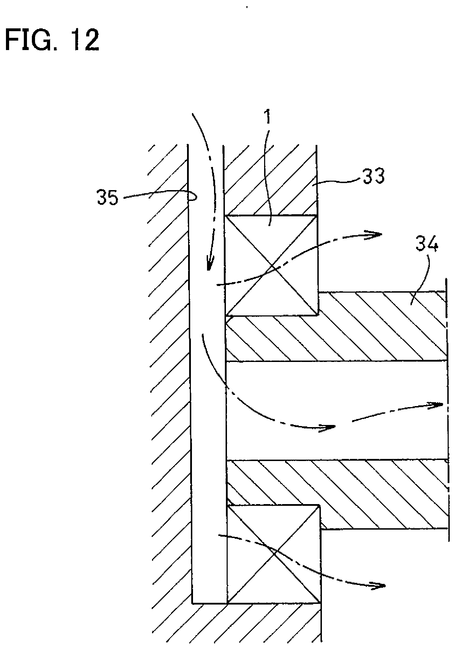

As shown in Fig. 12, this rolling bearing 1 is used in an inner-ringrotating application in which the rolling bearing 1 rotatably supports a rotary shaft 34 with the rolling bearing 1 attached to a stationary housing 33. The rotary shaft 34 is, for example, a rotary shaft that receives rotation from an electric motor of an electric vehicle, or a rotary shaft of a hybrid electric vehicle that uses an electric motor as an auxiliary drive for an engine. The housing 33 is provided with a lubricating oil supply passage 35 that supplies lubricating oil to the rolling bearing 1 from one axial side thereof.

Since this rolling bearing 1 is configured such that, as shown in Fig. 1, the inner-ring-fixed sealing member 8 rotates in unison with the inner ring 3, lubricating oil within the bearing moves radially outward due to centrifugal force, and is discharged to the outside of the bearing through the oil discharge gap 29 between the outer periphery of the inner-ring-fixed sealing member 8 and the inner periphery of the outer ring 2. Accordingly, lubricating oil is less likely to remain within the bearing, and this reduces churning resistance of lubricating oil within the bearing.

In addition, since the outer-ring-fixed sealing member 7 does not rotate even when the inner ring 3 rotates, as lubricating oil within the bearing is discharged through the oil discharge gap 29 due to centrifugal force, lubricating oil supplied from outside the bearing can be drawn into the bearing through the oil supply gaps 23 between the inner periphery of the outer-ring-fixed sealing member 7 and the outer periphery of the inner ring 3. Accordingly, shortage of lubricating oil within the bearing during high-speed rotation is less likely to occur, and stable lubrication within the bearing can be achieved.

Further, due to simultaneous occurrence of (i) discharge of lubricating oil within the bearing to the outside of the bearing through the oil discharge gap 29 between the outer periphery of the inner-ring-fixed sealing member 8 and the inner periphery of the outer ring 2, and (ii) drawing in of lubricating oil supplied from outside the bearing into the bearing through the oil supply gaps 23 between the inner periphery of the outer-ring-fixed sealing member 7 and the outer periphery of the inner ring 3, lubricating oil within the bearing is continuously exchanged, thereby ensuring smooth heat exchange in the bearing. Accordingly, temperature rise during high-speed rotation can be effectively prevented.

In addition, in this rolling bearing 1, since, as shown in Fig. 3, the oil supply gaps 23 are defined between the respective circumferentially adjacent pairs of protrusions 24 of the seal lip 21, the dimensions of the oil supply gaps 23 can be controlled with a high degree of accuracy by adjusting the heights of the protrusions 24 of the seal lip 21. Accordingly, the oil supply gaps 23 can be each set to a small dimension, thereby effectively preventing foreign matter from entering the bearing from outside the bearing through the oil supply gaps 23.

Further, in this rolling bearing, since, as shown in Fig. 2, the seal sliding contact surface 15 of the outer periphery of the inner ring 3 has a cylindrical shape extending axially from a portion with which the seal lip 21 is in sliding contact and connecting to the axial end surface 22 of the inner ring 3, the oil supply gaps 23 between the seal lip 21 and the inner ring 3 are significantly exposed to the exterior of the bearing compared to an arrangement in which the seal lip 21 is in sliding contact with the inner surface of a recess groove. Accordingly, lubricating oil supplied from outside the bearing can be smoothly introduced into the oil supply gaps 23.

Further, in this rolling bearing 1, as shown in Fig. 4, the inner-ring-fixed sealing member 8 includes a bent edge portion 28 formed by bending the radially outer end of the annular plate portion 27 axially inward. Therefore, when, as shown in Fig. 1, lubricating oil drawn into the bearing through the oil supply gaps 23 between the inner periphery of the outer-ring-fixing sealing member 7 and the outer periphery of the inner ring 3 moves radially outward due to centrifugal force, as shown in Fig. 4, a portion of the lubricating oil is received by the bent edge portion 28 of the inner-ring-fixed sealing member 8 before reaching the oil discharge gap 29 between the outer periphery of the inner-ring-fixed sealing member 8 and the inner periphery of the outer ring 2, thereby allowing the lubricating oil to remain within the bearing. Accordingly, lubricating oil drawn into the bearing through the oil supply gaps 23 as shown in Fig, 1 can be prevented from being excessively discharged through the oil discharge gap 29.

Further, in this rolling bearing 1, since, as shown in Fig. 4, at least a portion of the bent edge portion 28 of the inner-ring-fixed sealing member 8 is received in the circumferential groove 12 on the inner periphery of the outer ring 2, lubricating oil within the bearing that moves along the inner periphery of the other outer ring shoulder portion 10 toward the inner-ring-fixed sealing member 8 (toward the right side in the drawing) can be effectively received by the bent edge portion 28. Accordingly, lubricating oil within the bearing can be effectively prevented from being excessively discharged through the oil discharge gap 29.

Further, in this rolling bearing 1, the seal fixing surface 16 as shown in Fig. 4 and the seal sliding contact surface 15 as shown in Fig. 2 have an equal outer diameter and are symmetrical in shape with each other, whereby the inner ring 3 as shown in Fig. 1 is symmetrical with respect to a plane perpendicular to the axial direction. Therefore, the seal fixing surface 16 and the seal sliding contact surface 15 can be formed by machining in the same process when manufacturing the inner ring 3, thereby reducing the manufacturing cost. In addition, when assembling the rolling bearing 1, it is unnecessary to distinguish between the front and back orientations of the inner ring 3, thereby achieving excellent workability.

Further, in this rolling bearing 1, since, as shown in Fig. 1, a metal shield plate that does not come into contact with the inner periphery of the outer ring 2 is used as the inner-ring-fixed sealing member 8, rotational resistance of the bearing can be reduced.

Further, in this rolling bearing 1, the cross-sectional shape of the seal fixing groove 11 as shown in Fig. 2 and the cross-sectional shape of the circumferential groove 12 as shown in Fig. 4 are symmetrical with each other, whereby the outer ring 2 as shown in Fig. 1 is symmetrical with respect to a plane perpendicular to the axial direction. As a result, the seal fixing groove 11 and the circumferential groove 12 can be formed by machining in the same process when manufacturing the outer ring 2, thereby reducing the manufacturing cost. In addition, when assembling the rolling bearing 1, it is unnecessary to distinguish between the front and back orientations of the outer ring 2, thereby achieving excellent workability.

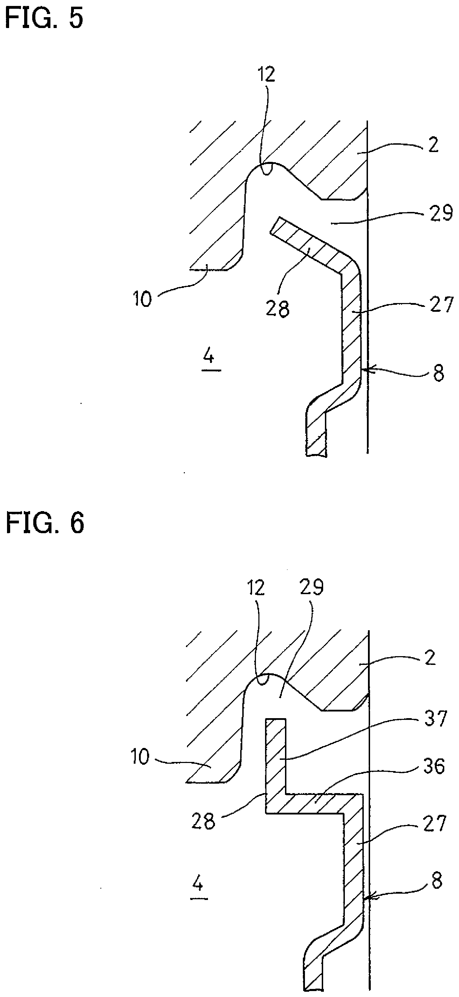

In the above-described embodiment, as shown in Fig. 4, a cylindrical portion that extends axially inward from the radially outer end of the annular plate portion 27 while having a constant diameter is exemplified and described as the bent edge portion 28, which is bent axially inward at the radially outer end of the annular plate portion 27. However, as shown in Fig. 5, the bent edge portion 28 may be a truncated conical portion whose diameter gradually increases axially inward from the radially outer end of the annular plate portion 27. In Fig. 5, the radially outer portion of the bent edge portion 28 is received in the circumferential groove 12 on the inner periphery of the outer ring 2. Even when the arrangement shown in Fig. 5 is used, since lubricating oil within the bearing that moves toward the inner-ring-fixed sealing member 8 (toward the right side in the drawing) along the inner periphery of the outer ring shoulder portion 10 can be effectively received by the bent edge portion 28. Accordingly, lubricating oil within the bearing can be effectively prevented from being excessively discharged through the oil discharge gap 29.

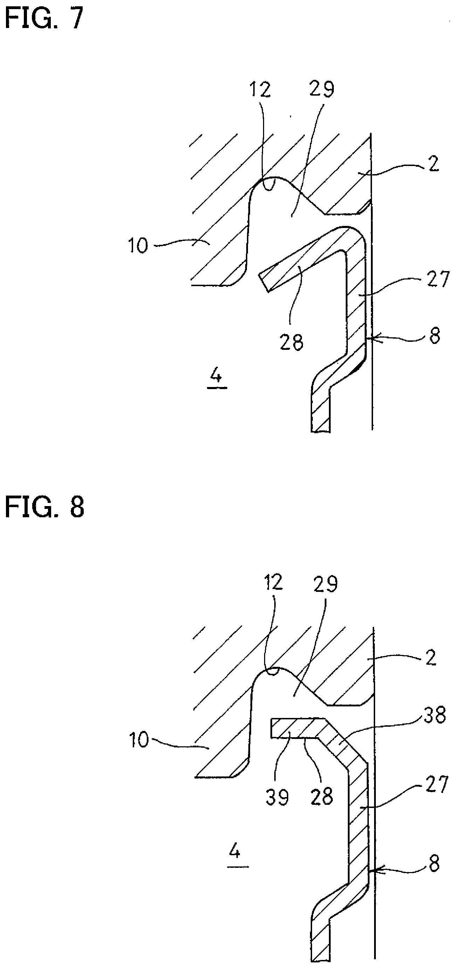

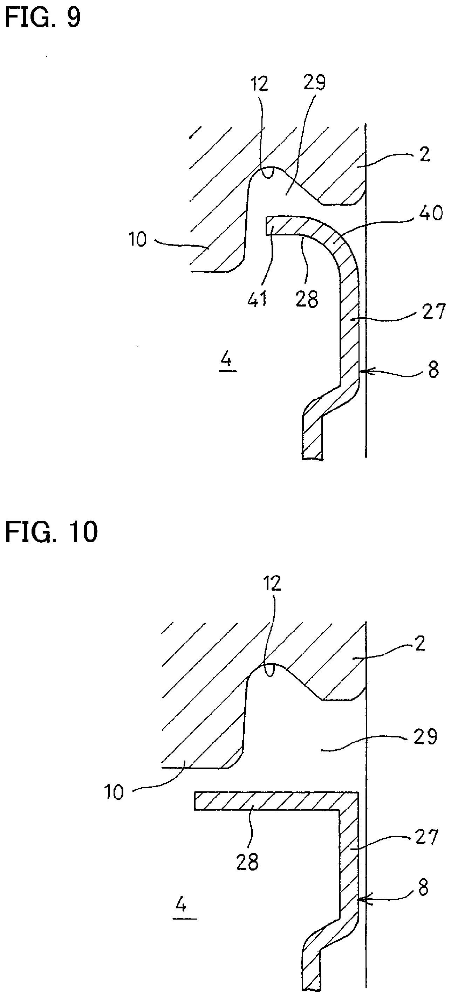

As shown in Fig. 6, the bent edge portion 28, which is bent axially inward at the radially outer end of the annular plate portion 27, may have a crank-shaped cross section comprising a cylindrical portion 36 and a circular-annular plate portion 37 extending radially outward from the distal end of the cylindrical portion 36. Alternatively, as shown in Fig. 7, the bent edge portion 28 may be a truncated conical portion whose diameter gradually decreases axially inward from the radially outer end of the annular plate portion 27. Alternatively, as shown in Fig. 8, the bent edge portion 28 may extend from the radially outer end of the annular plate portion 27 to a cylindrical portion 39 via a truncated conical portion 38. Alternatively, as shown in Fig. 9, the bent edge portion 28 may extend from the radially outer end of the annular plate portion 27 to a cylindrical portion 41 via a rounded portion 40 having a circular arc-shaped cross section. In each of the variations shown in Figs 6 to 9, since at least a portion of the bent edge portion 28 is received in the circumferential groove 12 on the inner periphery of the outer ring 2, lubricating oil within the bearing that moves toward the inner-ring-fixed sealing member 8 (toward the right side in the drawings) along the inner periphery of the outer ring shoulder portion 10 can be effectively received by the bent edge portion 28. As compared with the case shown in Fig. 10, in which the entire bent edge portion 28 is disposed outside of the circumferential groove 12, lubricating oil within the bearing can be effectively prevented from being excessively discharged through the oil discharge gap 29.

In the above-described embodiment, a sealing member comprising a metal core 17 and a rubber member 18 bonded to the metal core 17 by vulcanization is exemplified as the outer-ring-fixed sealing member 7. However, a shield plate formed by pressing a metal plate (for example, an inner-ring-fixed sealing member 8 of the above embodiment of which the radially inner and outer portions are interchanged) may be used as the outer-ring-fixed sealing member 7. In this case, an arrangement may be used in which the inner periphery of the outer-ring-fixed sealing member 7 is not in sliding contact with the outer periphery of the inner ring 3 and an annular oil supply gap 23 is defined between the inner periphery of the outer-ring-fixed sealing member 7 and the outer periphery of the inner ring 3.

In addition, in the above-described embodiment, a shield plate formed by pressing a metal plate is exemplified as the inner-ring-fixed sealing member 8. However, a sealing member comprising a metal core and a rubber member bonded to the metal core by vulcanization may be used as the inner-ring-fixed sealing member 8. In this case, for example, an outer-ring-fixed sealing member 7 of the above-described embodiment of which the radially inner and outer portions are interchanged is used as the inner-ring-fixed sealing member 8, and the gaps between the respective circumferentially adjacent pairs of protrusions 24 may be used as oil discharge gaps 29.

A rolling bearing and a rotary machine according to an embodiment as an example of the second invention will be described with reference to some of the accompanying drawings.

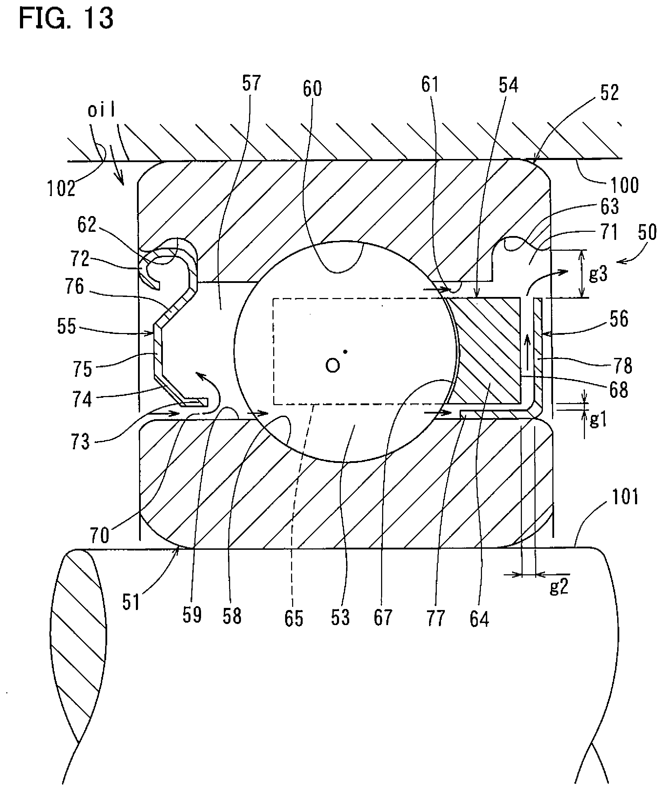

The rotary machine shown in Fig. 13 includes a housing 100, a rotary part 101 that rotates relative to the housing 100, a rolling bearing 50 that rotatably supports the rotary part 101 relative to the housing 100, and an oil supply portion 102 for supplying oil to the rolling bearing 50.

The rolling bearing 50 comprises an inner member 51; an outer member 52 surrounding the inner member 51; a plurality of rolling elements 53 received between the inner member 51 and the outer member 52; a cage 54 retaining these rolling elements 53; a shield 55 attached to the outer member 52; and a slinger 56 attached to the inner member 51. The rolling bearing 50 may have an inner diameter ranging from, e.g., 30 mm to 45 mm.

The rolling elements 53, the cage 54, the shield 55, and the slinger 56 are disposed in an annular space 57 defined by the outer periphery of the inner member 51 and the inner periphery of the outer member 52.

As used herein, the terms "axial direction", "axial", and "axially" refer to the direction along the bearing center axis of the rolling bearing 50; the terms "radial direction", "radial", and "radially" refer to the direction orthogonal to the bearing center axis; and the terms "circumferential direction", "circumferential", and "circumferentially" refer to the direction around the bearing center axis. With respect to the radial direction, the term "radially inward" refers to the direction approaching the bearing center axis, and the term "radially outward" refers to the opposite direction, i.e., the direction away from the bearing center axis. In Fig. 13, the axial direction corresponds to the horizontal direction, and the radial direction corresponds to the vertical direction.

The housing 100 comprises a casing that is stationary relative to the rotary part 101. The rotary part 101 comprises a shaft portion configured to be rotated by input torque. For example, if the rotary machine is an electric axle unit for driving a vehicle, examples of the rotary part 101 include a motor shaft and a transmission shaft of a speed reducer, and examples of the housing 100 include a motor case and a speed reducer case.

The oil supply portion 102 supplies oil to one axial side of the rolling bearing 50. The oil reaches the outer periphery of the inner member 51 at one axial end thereof. In the illustrated example, splash lubrication is employed, and a tube portion configured to drop oil toward one axial side surface of the rolling bearing 50 is used as the oil supply portion 102. If oil bath lubrication is employed, as the oil supply portion, an oil bath portion may be used which stores oil at a level at which a lower portion of the rolling element 53 located at the lowest position of the orbit of the rolling elements 53 is immersed in the oil. The oil supply portion 102 may supply oil in a liquid state, such as in an oil bath lubrication or splash lubrication, or may supply oil in a mist or droplet, such as in drip lubrication or spray lubrication. In Fig. 13, the motion of oil is schematically indicated by arrows to which reference numerals are not applied. The ambient atmosphere around the rolling bearing 50 is generally air. The amount of oil supplied by the oil supply portion 102 is small, and the oil mixes with the ambient atmosphere and enters the annular space 57 to form a lubricating fluid that contributes to lubrication and cooling of the rolling elements 53 and other components.

The inner member 51 comprises a raceway ring having, on its outer periphery, a first raceway surface 58 and a shoulder portion 59 defining the outer diameter of the inner member 51. The radially inner surface of the inner member 51 is fitted onto the rotary part 101.

The outer member 52 comprises a raceway ring having, on its inner periphery, a second raceway surface 60, a shoulder portion 61 defining the inner diameter of the outer member 52, a circumferential groove portion 62 extending around the entire circumference and formed at a position displaced relative to the second raceway surface 60 toward the one axial side, and a cutout portion 63 disposed at a position displaced relative to the second raceway surface 60 toward the other axial side and having a diameter larger than the diameter of the shoulder portion 61. The radially outer surface of the outer member 52 is fitted to the housing 100.

The rolling elements 53 are balls that roll on the first raceway surface 58 and the second raceway surface 60.

The rolling bearing 50 is a deep-groove ball bearing.

The highest rotational speed of the rolling bearing 50 associated with rotation of the rotary part 101 is set to a dmn value of 650,000 or more. In the specification, the dmn value is a value calculated by the following expression: [{Outer diameter of Rolling bearing (mm) + Inner diameter of Rolling bearing (mm)}/2 × Rotational speed n (min⁻¹)]. The outer diameter of the rolling bearing 50 is defined by the radially outer surface of the outer member 52. The inner diameter of the rolling bearing 50 is defined by the radially inner surface of the inner member 51. The rotational speed n is defined as the number of revolutions per minute of the inner member 51.

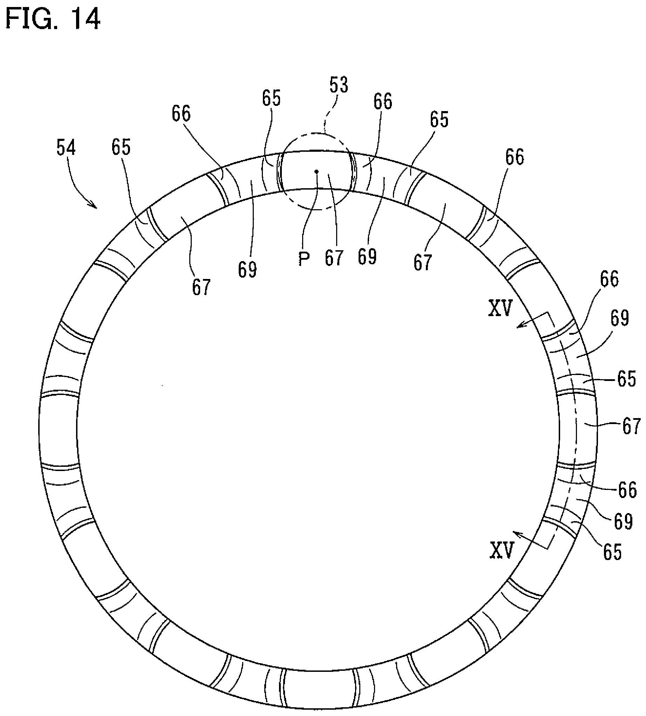

As shown in Figs. 13 and 14, the cage 54 is a seamless resin member including an annular portion 64 extending circumferentially at a position on the side opposite from the one axial side relative to the rolling elements 53, i.e., the other axial side (right side in Fig. 13), and a plurality of pairs of claw portions 65 and 66 extending from the annular portion 64 toward the one axial side. Each pair of claw portions 65 and 66 extend from the annular portion 64 so as to define a space 67 that is open to the radially inner side, the radially outer side and the one axial side (left side in Fig. 13). The spaces 67 are arranged at equal circumferential intervals in plural portions of the cage 54.

As shown in Figs. 13 to 15, the rolling elements 53 are disposed in the respective spaces 67. Each space 67 is defined by a portion of the annular portion 64, and the opposed portions of two claw portions 65 and 66 that are circumferentially opposed to each other with the rolling element 53 interposed therebetween. The two claw portions 65 and 66 each have a distal end located beyond the center of the corresponding rolling element 53 toward the one axial side. The minimum width of an opening formed in one axial side surface of the cage 54 by the distal ends of the two claw portions 65 and 66 is smaller than the diameter of the rolling element 53. The rolling element 53 is disposed in the space described above by being forcibly inserted to pass through the opening between the distal ends of the two claw portions 65 and 66.

The annular portion 64 is radially opposed to, and radially spaced apart from, the shoulder portion 61 of the outer member 52 on the other axial side. The side surface 68 of the annular portion 64 on the other axial side is a flat surface extending radially and is located at the other axial end of the cage 54. The claw portions 65 and 66 are located at the one axial end of the cage 54. The axial length of each claw portion 65, 66 from a resin portion extending around the entire circumference and forming the annular portion 64 is shorter/smaller than the diameter of the rolling element 53.

The cage 54 is guided radially and axially by the rolling elements 53. Accordingly, as shown in Fig. 13, the cage 54 is out of contact with the inner member 51, the outer member 52, the shield 55, and the slinger 56.

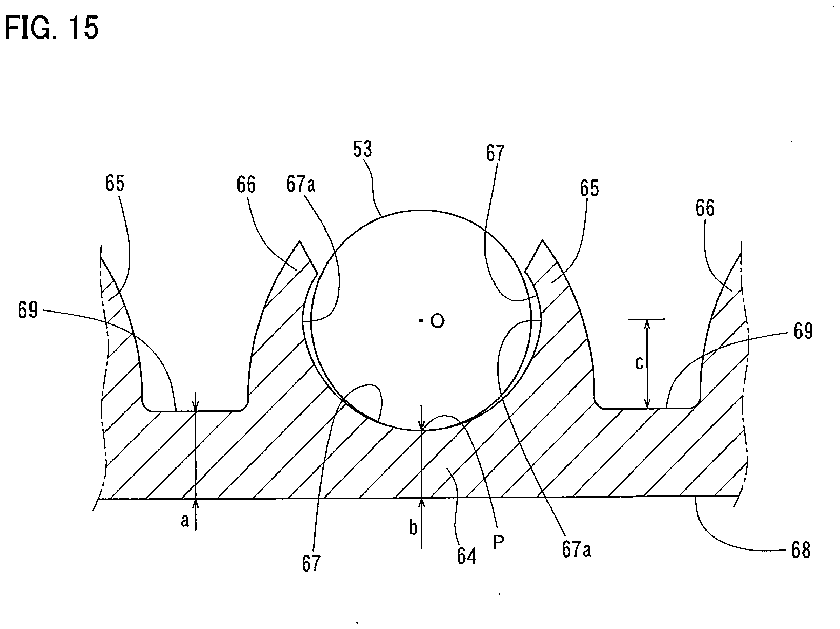

Most of the surface of the cage defining each space 67 extends along an imaginary spherical surface and constitutes a guide surface capable of coming into contact with the rolling element 53. The geometric center O of the space 67 is the center of the above imaginary spherical surface. In the shown example, the center O of the space 67 coincides with the center of the rolling element 53. In addition, in Fig. 15, the vertical direction corresponds to the axial direction, and the horizontal direction corresponds to the circumferential direction.

As shown in Fig. 15, each pair of claw portions 65 and 66 each include an oil entry passage 67a facing the corresponding space 67. The oil entry passage 67a is a flow passage that defines, between the oil entry passage 67a and the rolling element 53, a groove space which the rolling element 53 cannot enter. During operation of the rolling bearing 50, oil enters a space between the oil entry passage 67a and the rolling element 53, thereby promoting lubrication and cooling of the rolling element 53 and its surrounding area.

The oil entry passages 67a are located on an imaginary plane passing through the centers of the rolling elements 53. Since the spinning speed of the rolling elements 53 (speed at which the rolling elements 53 roll about their own axes) is highest on or near the imaginary plane, it is preferable to arrange the oil entry passages 67a on the imaginary plane in order to promote lubrication.

As shown in Figs. 14 and 15, the portion of the cage 54 that is located between two claw portions 65 and 66 located between each circumferentially adjacent pair of rolling elements 53 is recessed toward the other axial side so as to form a recessed portion. Herein, a represents the minimum axial thickness of the portion of the cage between (i) a recessed end surface 69 located at the other axial end of the recessed portion between the two claw portions 65 and 66 and (ii) the side surface of the cage 54 on the other axial side. In addition, b represents the axial thickness of the portion of the cage between (i) the pocket bottom P of each space 67 at the other axial end thereof and (ii) the side surface of the cage 54 on the other axial side. Further, c represents the minimum distance between an imaginary plane passing through the centers of the rolling elements 53 and the recessed end surface 69. The inequalities a > b and c > 0 are satisfied in the cage 54. Accordingly, while ensuring the circular-annular strength of the cage 54, the mass of the claw portions 65 and 66 can be reduced, thereby reducing centrifugal force acting on the claw portions 65 and 66. As a result, deformation of the cage 54 during high-speed rotation can be reduced, thereby preventing interference between the claw portions 65 and 66 and other members such as the rolling elements 53.

As a resin material for forming the cage 54, for example, a material containing polyetheretherketone (PEEK) or polyphenylene sulfide (PPS) as its main component may be used, or a composite material may be used in which reinforcing fibers such as carbon fibers or glass fibers are mixed into an appropriate matrix resin. The axial thicknesses a, b and c may be determined depending on the strength of the resin material for forming the cage 54 so as to satisfy the inequalities a > b and c > 0. For example, if polyamide resin is used as the main component of the resin material, and the axial thickness b is set to 1/70 or more and 1/30 or less of the cage P.C.D, rigidity at the relatively thin pocket bottom P can be ensured, thereby effectively preventing deformation during high-speed rotation. In this case, when a weld line generated during injection molding of the cage 54 is located at the position of the minimum axial thickness a, strength at the weld line can be ensured by setting the minimum axial thickness a to1/62 or more and 1/26 or less of the cage P.C.D. The cage P.C.D. refers to the diameter of an imaginary circle extending circumferentially through the centers O of the respective spaces 67.

As shown in Fig. 13, the shield 55 extends relative to the radially inner surface of the outer member 52 toward the radially outer surface of the inner member 51 at a position displaced relative to the rolling elements 53 and the cage 54 toward the one axial side. The space between the shield 55 and the inner member 51 constitutes a first oil port 70. The first oil port 70 is a space through which oil can pass between the shield 55 and the inner member 51, and the first oil port 70 serves as an inlet through which a lubricating fluid such as oil which has reached the gap between the shield 55 and the inner member 51 from the one axial side of the annular space 57 are drawn into a region of the annular space 57 closer to the rolling elements 53 than to the shield 55.

During rotation of the rolling bearing 50, in which the inner member 51 rotates, as a lubricating fluid such as oil is agitated by the rolling elements 53 and the cage 54, the lubricating fluid such as oil moving toward the one axial side of the rolling elements 53 and the cage 54 is received by the shield 55, thereby reducing the influence of an air curtain on the one axial side surface of the rolling bearing 50. As a result, oil supplied from the oil supply portion 102 toward the one axial side of the rolling bearing 50 more easily reaches the first oil port 70.

The slinger 56 extends relative to the radially outer surface of the inner member 51 toward the radially inner surface of the outer member 52 at a position displaced relative to the rolling elements 53 and the cage 54 toward the other axial side. The space between the slinger 56 and the outer member 52 constitutes a second oil port 71. The second oil port 71 is a space through which oil can pass between the slinger 56 and the outer member 52 and the second oil port 71 serves as an outlet through which a lubricating fluid such as oil drawn into the bearing through the first oil port 70 and reaching a region of the annular space 57 on the other axial side of the rolling elements 53 and the cage 54 is discharged to the outside of the annular space 57.

The slinger 56 allows centrifugal force to act on a lubricating fluid such as oil in the annular space 57, thereby facilitating discharge of the lubricating fluid such as oil through the second oil port 71. As a result, back pressure of the second oil port 71 against the first oil port 70 is reduced. Due to the pressure difference between the first oil port 70 and the second oil port 71, a lubricating fluid such as oil that has lubricated and cooled the rolling elements 53 and other components is drawn toward the second oil port 71, thereby enabling oil and the ambient atmosphere that are supplied from the oil supply portion 102 to be drawn into the bearing more easily through the first oil port 70.

The shield 55 and the slinger 56 are each formed from a single metal plate. In this embodiment, as the metal plate, a steel plate is used, such as an SPC steel sheet specified in JIS standards.

The shield 55 is constituted by a curled plate portion 72 held in the circumferential groove portion 62 of the outer member 52; a distal end plate portion 73 that is the portion of the shield 55 closest to the shoulder portion 59 of the inner member 51 on the one axial side; a radially inner tapered plate portion 74 extending obliquely radially outward from the one axial side of the distal end plate portion 73; an intermediate plate portion 75 extending radially from the radially inner tapered portion 74; and a radially outer tapered plate portion 76 extending obliquely from the radially inner side of the curled plate portion 72 toward the one axial side to the intermediate plate portion 75.

The shield 55 is attached to the outer member 52 by crimping the curled plate portion 72 into the circumferential groove portion 62 of the outer member 52.

The distal end plate portion 73 is radially opposed to, and radially spaced apart from, the shoulder portion 59 of the inner member 51 on the one axial side. The inner periphery of the distal end plate portion 73 defines the inner diameter of the shield 55. The inner diameter of the shield 55 is no greater than the inner diameter of the cage 54. Accordingly, the entire cage 54 is covered by the shield 55 from the one axial side. During rotation of the rolling bearing 50, most of the lubricating fluid such as oil that is agitated by the rolling elements 53 and the cage 54 and moves toward the one axial side is received by the shield 55.

The radially inner tapered plate portion 74 extends obliquely radially outward from the distal end plate portion 73, which defines the inner diameter of the shield 55, toward the one axial side, so that the space between the radially inner tapered plate portion 74 and the shoulder portion 59 of the inner member 51 on the one axial side is larger than the space between the distal end plate portion 73 and this shoulder portion 59. Accordingly, oil supplied from the oil supply portion 102 more easily enters the first oil port 70 through the space between the radially inner tapered plate portion 74 and the shoulder portion 59.

The distal end plate portion 73 has a cylindrical shape that extends circumferentially from the radially inner tapered plate portion 74 and that has an axial length. Accordingly, a lubricating fluid such as oil that has entered the first oil port 70 is more easily guided toward the rolling elements 53 along the inner periphery of the distal end plate portion 73 and the shoulder portion 59.

The distance between the shield 55 and the cage 54 is greater than the distance between the shield 55 and each rolling element 53. Since the annular portion 64 is disposed on the other axial side of the rolling elements 53, the cage 54 is located farther from the shield 55 toward the other axial side than the rolling elements 53. Since the annular portion 64 is not present between the shield 55 and the rolling elements 53, the space between the shield 55 and the rolling elements 53 is relatively large. Accordingly, a lubricating fluid such as oil that has been drawn into the bearing through the first oil port 70 enters a relatively large space between the shield 55 and the rolling elements 53, diffuses therein, and more easily reaches the rolling elements 53. In addition, a lubricating fluid such as oil agitated is obstructed by the annular portion 64, thereby decreasing the flow rate of the fluid toward the other axial side and increasing the flow rate of the fluid toward the one axial side through the relatively large space. When a lubricating fluid such as oil flowing toward the one axial side is received by the shield 55, its flow direction changes, and the fluid diffuses into the relatively large space. If the lubricating fluid such as oil received by the shield 55 flows toward the outer member 52, the fluid is guided by the radially outer tapered plate portion 76 and thus more easily reaches the rolling elements 53. In addition, if the lubricating fluid such as oil received by the shield 55 flows toward the inner member 51, the fluid merges with a lubricating fluid such as oil entering the relatively large space between the shield 55 and the rolling elements 53 through the first oil port 70. These fluids are guided by the radially inner tapered plate portion 74 and the distal end plate portion 73, and thus more easily reaches the rolling elements 53.

The slinger 56 is constituted by a tubular plate portion 77 fitted around the outer peripheral portion of the inner member 51 on the other axial side, and a side plate portion 78 extending radially outward from the other axial side of the tubular plate portion 77.

The slinger 56 is attached to the inner member 51 by press-fitting the tubular plate portion 77 onto the inner member 51.

The tubular plate portion 77 is radially opposed to, and radially spaced apart from, the inner periphery of the annular portion 64. The side plate portion 78 is axially opposed to, and axially spaced apart from, the side surface 68 of the annular portion 64 on the other axial side.

Since the tubular plate portion 77 is located between the inner member 51 and the annular portion 64, the radial gap g1 between the tubular plate portion 77 and the annular portion 64 is smaller than the radial gap between the annular portion 64 and the inner member 51. A lubricating fluid such as oil flowing toward the space between the annular portion 64 and the tubular plate portion 77 from the vicinity of the rolling elements 53 is obstructed by the tubular plate portion 77 and is thus less likely to pass between the annular portion 64 and the tubular plate portion 77. During high-speed rotation of the rolling bearing 50, centrifugal action by which a lubricating fluid such as oil kept in contact with the outer periphery of the cage 54, the outer periphery of the inner member 51, the slinger 56, and the like is fed radially outward under centrifugal force is strong. As a result, the lubricating fluid such as oil tends to be unevenly distributed toward the outer member 52, and oil tends to be insufficient between the cage 54 and the inner member 51. Accordingly, the fact that a lubricating fluid such as oil is less likely to pass between the annular portion 64 and the tubular plate portion 77 from the vicinity of the rolling elements 53is advantageous for lubrication and cooling of the rolling elements 53 and the first raceway surface 58.

The radial gap g1 between the tubular plate portion 77 and the annular portion 64 is smaller than the axial gap g2 between the side surface 68 of the annular portion 64 on the other axial side and the side plate portion 78. Accordingly, the flow passage cross-sectional area between the side surface 68 of the annular portion 64 on the other axial side and the side plate portion 78 is larger than the flow passage cross-sectional area between the tubular plate portion 77 and the annular portion 64.

All of a lubricating fluid such as oil that has passed between the tubular plate portion 77 and the annular portion 64 and that has reached the other axial side enters the space between the side surface 68 of the annular portion 64 on the other axial side and the side plate portion 78. At this time, the lubricating fluid is guided by the side plate portion 78, thereby changing the flow direction radially outward. In addition, when a lubricating fluid such as oil passes through the space defined between the tubular plate portion 77 and the annular portion 64 so as to have a relatively small flow passage cross-sectional area, and enters the space defined between the side surface 68 of the annular portion 64 on the other axial side and the side plate portion 78 so as to have a relatively large flow passage cross-sectional area, the velocity of the lubricating fluid toward the radially outer side increases due to a decrease in pressure. Due to this increase in velocity, the lubricating fluid such as oil that has passed between the side surface 68 of the annular portion 64 on the other axial side and the side plate portion 78 is more easily discharged through the second oil port 71.

In addition, in the space between the side surface 68 of the annular portion 64 on the other axial side and the side plate portion 78, a lubricating fluid such as oil kept in contact with the side surface 68 or the side plate portion 78 is fed radially outward by centrifugal force. The lubricating fluid such as oil kept in contact with the side surface 68 or the side plate portion 78 cannot escape from the space between the side surface 68 and the side plate portion 78. Accordingly, centrifugal action is exerted on the lubricating fluid by the side surface 68 and the side plate portion 78 from these portions 68 and 78 up to the second oil port 71, to which the lubricating fluid is flung radially outward.

If the axial gap g2 between the side surface 68 of the annular portion 64 on the other axial side and the side plate portion 78 is too large, the flow of a lubricating fluid such as oil is disturbed between the side surface 68 and the side plate portion 78, thereby reducing/worsening the efficiency with which a lubricating fluid such as oil is fed by centrifugal force. Accordingly, the axial gap g2 is set to, for example, 1 mm or more and 3 mm or less.

The radial gap g3 between the outer peripheral edge of the side plate portion 78 and the outer member 52 is larger than the axial gap g2 between the side surface 68 of the annular portion 64 on the other axial side and the side plate portion 78. Accordingly, the flow passage cross-sectional area between the outer peripheral edge of the side plate portion 78 and the outer member 52 is larger than the flow passage cross-sectional area between the side surface 68 of the annular portion 64 on the other axial side and the side plate portion 78.

When a lubricating fluid such as oil that has passed between the side surface 68 of the annular portion 64 on the other axial side and the side plate portion 78 to the radially outside enters the space between the outer peripheral edge of the side plate portion 78 and the outer member 52, which has a relatively large flow passage cross-sectional area, from the space between the side surface 68 of the annular portion 64 on the other axial side and the side plate portion 78, which has a relatively small flow passage cross-sectional area, the radially outward velocity of the lubricating fluid increases due to a decrease in pressure. Accordingly, a lubricating fluid such as oil that has passed between the side surface 68 of the annular portion 64 on the other axial side and the side plate portion 78 to the radially outside is more easily discharged through the second oil port 71.

The cutout portion 63 of the outer member 52 is provided to have a larger diameter than the shoulder portion 61 at a position radially opposed to the side plate portion 78, thereby allowing the second oil port 71 to extend further radially outward, so that a reduction in the outer diameter of the side plate portion 78 can be avoided. Accordingly, the fact that the space axially opposed between the side plate portion 78 and the side surface 68 of the annular portion 64 on the other axial side is expanded radially outward to a corresponding extent is advantageous for enhancing the above-described centrifugal action.

Since the annular portion 64 is radially opposed to and radially spaced apart from the shoulder 61 of the outer member 52, and the side plate portion 78 has a smaller diameter than that of the shoulder portion 61, a lubricating fluid such as oil flowing from the vicinity of the rolling elements 53 toward the other axial side between the shoulder portion 61 and the outer periphery of the cage 54 can reach the second oil port 71 without coming into axial contact with the side plate portion 78. Accordingly, a lubricating fluid such as oil that has passed between the outer member 52 and the outer periphery of the cage 54 is more easily guided toward the second oil port 71. As a result, a lubricating fluid such as oil present near the second oil port 71 is more easily discharged through the second oil port 71. In the illustrated example, in order to maximize the centrifugal action between the side surface 68 of the annular portion 64 on the other axial side and the side plate portion 78, the outer diameter of the side plate portion 78 is equal to or substantially equal to the outer diameter of the annular portion 64.

A lubricating fluid such as oil that has passed between the side surface 68 of the annular portion 64 on the other axial side and the side plate portion 78 merges with a lubricating fluid such as oil that has passed between the annular portion 64 and the shoulder portion 61 to the other axial side, and is discharged through the second oil port 71. During high-speed rotation of the rolling bearing 50, when the momentum of a lubricating fluid such as oil that has passed between the side surface 68 and the side plate portion 78 is high, the lubricating fluid can reach the cutout portion 63. The lubricating fluid such as oil that has reached the cutout portion 63 collides therewith and diffuses, and moves toward the second oil port 71, or is guided by the cutout portion 63 and swirls counterclockwise when viewed in the drawing between the cutout portion 63 and the outer periphery of the annular portion 64 before moving toward the second oil port 71. Even when a lubricating fluid such as oil collides with the cutout portion 63, movement toward the space between the shoulder portion 61 and the outer periphery of the annular portion 64 is limited, since the cutout portion 63 forms a radial step relative to the shoulder portion 61.

The side plate portion 78 is in contact with the ambient atmosphere around the rolling bearing 50 at its side surface on the other axial side. During rotation of the rolling bearing 50, in which the inner member 51 rotates, the ambient atmosphere in contact with the side surface of the side plate portion 78 on the other axial side is driven radially outward by centrifugal force. This outward flow blows fluid present near the second oil port 71 outside the annular space 57 to create a low-pressure region, thereby promoting discharge of a lubricating fluid such as oil through the second oil port 71.

When the rolling bearing 50 is a ball bearing, it can be evaluated whether lubrication between the rolling elements 53 and the raceway surfaces 58 and 59 achieves sufficient lubrication when the amount of oil drawn into the bearing through the first oil port 70 is small, using the test results disclosed in Non-Patent Documents 1 and 2 and a reduction *ϕ*ᵣ in rolling viscous resistance based on the findings of the friction torque estimation method disclosed in Non-Patent Document 3.

In the specification, the reduction *ϕ*ᵣ in rolling viscous resistance is a value calculated by the following equation 1:
[EQUATION 1] $ϕ r = k \frac{{T}^{0.5}}{ν {a}^{2}}$ Equation 1
T: Passage period of balls (rolling elements) (msec)
v: Kinematic viscosity of oil (mm²/s)
a: Major axis radius of contact ellipse
k: Amount of oil (ml/min)

According to the test examples of Non-Patent Documents 1 and 2, under test conditions in which the amount of oil supplied is 70 ml/min or 100 ml/min, sufficient lubrication is maintained up to the highest speed under the test conditions, whereas under a test condition in which the amount of oil supplied is 40 ml/min, starvation occurs at a speed lower than the highest speed. When reductions *ϕ*ᵣ in rolling viscous resistance under the respective test conditions are calculated, under the test condition in which the amount of oil supplied is 40 ml/min, C_{Pr} = 0.288; under the test condition in which the amount of oil supplied is 70 ml/min, *ϕ*ᵣ = 0.505; and under the test condition in which the amount of oil supplied is 100 ml/min, *ϕ*ᵣ = 0.721. Therefore, it is considered that sufficient lubrication can be maintained when *ϕ*ᵣ ≥ 0.505.

Specifically, *ϕ*ᵣ is calculated using:
k, which represents the amount of oil drawn into the bearing through the first oil port 70;
v, which represents the kinematic viscosity of oil in the operating environment; and
T, which represents the passage period of the rolling elements 53 at a predetermined dmn value of the rolling bearing 50 in the operating environment; and
a, which represents the major axis radius of the contact ellipse in a contact portion between the rolling element 53 and the first raceway surface 58 or the second raceway surface 60. For example, when the dmn value of the rolling bearing 50 is a predetermined value of 650,000 or more and *ϕ*ᵣ ≥ 0.505, it is considered that sufficient lubrication can be maintained at the predetermined value.

The rolling bearing 50 shown in Figs. 13 to 15 is configured as described above, and includes an inner member 51 having a first raceway surface 58, an outer member 52 having a second raceway surface 60, a plurality of rolling elements 53 disposed between the first raceway surface 58 and the second raceway surface 60, and a cage 54 that retains the rolling elements 53.

Specifically, this rolling bearing 50 further includes a shield 55 that extends from the radially inner surface of the outer member 52 toward the radially outer surface of the inner member 51 at a position displaced relative to the rolling elements 53 and the cage 54 toward one axial side (toward the left side in Fig. 13), and a slinger 56 that extends from the radially outer surface of the inner member 51 toward the radially inner surface of the outer member 52 at a position displaced relative to the rolling elements 53 and the cage 54 toward the other axial side (toward the right side in Fig. 13). The first oil port 70, through which oil is drawn into the bearing, is defined between the shield 55 and the inner member 51, and the second oil port 71, through which oil drawn into the bearing through the first oil port 70 is discharged, is defined between the slinger 56 and the outer member 52. As a result, during rotation of the rolling bearing 50, in which the inner member 51 rotates, a lubricating fluid such as oil that is agitated by the rolling elements 53 and the cage 54 and moves toward the one axial side is received by the shield 55, thereby reducing an effect of the air curtain on the side surface of the rolling bearing 50 on the one axial side and facilitating oil supplied to the one axial side of the rolling bearing 50 to reach the first oil port 70. On the other hand, on the other axial side of the rolling bearing 50, the slinger 56 subjects oil that has lubricated and cooled the rolling elements 53 to centrifugal action to promote discharge of the oil through the second oil port 71, thereby reducing back pressure of the second oil port 71 relative to the first oil port 70 and facilitating drawing in of oil through the first oil port. In this rolling bearing 50, by virtue of the effect of reducing the influence of the air curtain and the effect of reducing back pressure at the second oil port 71 relative to the first oil port 70, oil is prevented from flowing back through the first oil port 70, the oil drawn into the bearing through the first oil port 70 is drawn toward the second oil port 71, and the oil that has lubricated and cooled the rolling elements 53 and the like is discharged through the second oil port 71, thereby enabling a centrifugal pumping action to be exhibited. An increase in the dmn value (bearing rotational speed) of this rolling bearing 50 enhances the centrifugal pumping action. Thus, since the rolling bearing 50 includes the shield 55 and the slinger 56 for exhibiting an effective centrifugal pumping action during high-speed rotation, the bearing rotational speed at which starvation occurs can be increased by the rolling bearing itself, without requiring an increase in size or complexity of an electric axle unit or the like.

In addition, in this rolling bearing 50, the cage 54 includes an annular portion 64 that extends circumferentially on the other axial side of the rolling elements 53, and the slinger includes a side plate portion 78 axially opposed to and axially spaced apart from the side surface 68 of the annular portion 64 on the other axial side. Accordingly, oil is guided into the space between the annular portion 64 and the side plate portion 78, centrifugal action is exerted on the oil by both portions 68 and 78 so as to prevent the oil from escaping from the space, whereby the oil can be fed to the second oil port 71.

Further, in this rolling bearing 50, the slinger 56 includes a tubular plate portion 77 fitted to the inner member 51 so as to be radially opposed to the annular portion 64 and be radially spaced apart from the annular portion 64, the side plate portion 78 extends radially outward from the other axial side of the tubular plate portion 77, and the radial gap g1 between the tubular plate portion 77 and the annular portion 64 is smaller than the axial gap g2 between the side surface 68 of the annular portion 64 on the other axial side and the side plate portion 78. Accordingly, oil is less likely to pass through the space between the annular portion 64 and the tubular plate portion 77, so that oil can be more readily supplied to the rolling elements 53 through the space between the inner periphery of the cage 54 and the inner member 51, where the amount of oil tends to become relatively small during high-speed rotation of the rolling bearing 50.

Further, in this rolling bearing 50, the radial gap g3 between an outer peripheral edge of the side plate portion 78 and the outer member 52 is larger than the axial gap g2 between the side surface 68 of the annular portion 64 on the other axial side and the side plate portion 78. Accordingly, oil that has passed through the space between the side surface 68 of the annular portion 64 on the other axial side and the side plate portion 78 can be more readily discharged through the second oil port 71.

Further, in this rolling bearing 50, the outer member 52 includes a shoulder portion 61 radially opposed to the annular portion 64 and radially spaced apart from the annular portion 64, and a cutout portion 63 having a diameter larger than the diameter of the shoulder portion 61 at a position radially opposed to the side plate portion 78, and the side plate portion 78 has an outer diameter smaller than the diameter of the shoulder portion 61. Accordingly, the second oil port 71 can be radially enlarged by the cutout portion 63, thereby avoiding the need to reduce the diameter of the side plate portion 78, and oil that has passed through the space between the outer member 52 and the outer periphery of the cage 54 can be more readily guided toward the second oil port 71.

Further, in this rolling bearing 50, the shield 55 has an inner diameter not greater than the inner diameter of the cage 54. Accordingly, since the entire cage 54 and a large portion of the rolling elements 53 are covered by the shield 55 from the one axial side, most of the oil that is agitated by the cage 54 and the rolling elements 53 and moves toward the one axial side can be received by the shield 55, thereby preventing oil from flowing back through the first oil port 70.

Further, in this rolling bearing 50, the cage 54 is located farther from the shield 55 toward the other axial side than the rolling elements 53. Accordingly, since a large space is provided between the shield 55 and the rolling elements 53, oil can diffuse within the space and the oil can more easily reach the rolling elements.

Further, in this rolling bearing 50, the shield 55 includes a distal end plate portion 73 that is a portion of the shield 55 closest to the inner member 51, and a radially inner tapered plate portion 74 extending obliquely radially outward from the one axial side of the distal end plate portion 73. Accordingly, it is possible to more easily enter oil supplied to the rolling bearing 50 toward the one axial side into the first oil port 70, and to facilitate oil received by the shield 55 reaching the rolling elements 53.

Further, in this rolling bearing 50, the cage 54 is a resin member including the annular portion 64, which extends circumferentially; and plural pairs of claw portions 65 and 66 extending from the annular portion 64 toward the one axial side so as to define spaces 67 that are open to a radially inner side, a radially outer side and the one axial side. The rolling elements 53 are balls disposed in the respective spaces 67. A portion of the cage 54 between two of the claw portions 65 and 66 that are located between each circumferentially adjacent pair of the rolling elements 53 is recessed toward the other axial side so as to form a recessed portion. Inequalities a > b and c > 0 are satisfied, where a represents a minimum axial thickness of a portion of the cage 54 between (i) a recessed end surface 69 located at an axial end of the recessed portion on the other axial side and (ii) the side surface of the cage 54 on the other axial side (the side surface 68 of the annular portion 64 on the other axial side), b represents an axial thickness of a portion of the cage 54 between (i) a pocket bottom P of each space 67 on the other axial side and (ii) the side surface of the cage 54 on the other axial side (the side surface 68 of the annular portion 64 on the other axial side), and c represents a minimum distance between (i) an imaginary plane passing through the centers of the rolling elements 53 and (ii) the recessed end surface 69. Accordingly, since deformation of the cage 54 due to centrifugal force during high-speed rotation is reduced, the rolling bearing 50 can be used as a ball bearing suitable for high-speed rotation applications.

Further, a rotary machine according to an embodiment includes the rolling bearing 50, a rotary part 101 supported by the rolling bearing 50, and an oil supply portion 102 for supplying oil to the one axial side of the rolling bearing 50. Accordingly, since oil is drawn into the bearing through the first oil port 70 during high-speed rotation of the rolling bearing 50, the bearing rotational speed at which starvation occurs can be increased even without an oil supply portion capable of accurately controlling the amount of oil supplied, thereby enabling high-speed operation of the rotary part 101.

In this embodiment, an example has been described in which a space communicating axially from the first oil port 70 to the rolling elements 53 is provided. However, a circumferential groove extending around the entire circumference may be formed with the outer periphery of the one axial end of the inner member, and a labyrinth clearance may be defined between the circumferential groove and the distal end plate portion of the shield. In addition, an example has been described in which the shield 55 is formed from a metal plate. However, it may be a seal having an elastomer seal lip. For example, the seal may be a non-contact seal in which the seal lip is disposed so as to define a labyrinth clearance between the seal lip and the circumferential groove of the inner member as described above, or the seal may include a metal core having a shape corresponding to that of the shield 55.

Further, the annular portion of the cage may be disposed on the one axial side of the rolling elements 53. In this case, since a lubricating fluid such as oil agitated by, e.g., the rolling elements is obstructed by the annular portion and is thus less likely to be guided toward the first oil port 70, the influence of the air curtain can be advantageously reduced. On the other hand, this arrangement is disadvantageous in two respects: (1) oil drawn into the bearing through the first oil port is also obstructed by the annular portion and thus becomes less likely to reach the rolling elements; and (2) because the gap between the slinger and the cage becomes large, even when centrifugal action is applied to a lubricating fluid such as oil by the slinger, the lubricating fluid such as oil less likely to move toward the second oil port, resulting in a weaker centrifugal pumping action. Therefore, taking these advantages and disadvantages into consideration, it may be determined on which side of the rolling elements the annular portion of the cage is to be disposed.

Further, the present invention may be applied to not only deepgroove ball bearings, but also to angular-contact ball bearings and roller bearings.

The above-described embodiments are mere examples in every respect, and the present invention is not limited thereto. The scope of the present invention is indicated by not the above description but the claims, and should be understood to include all modifications within the meaning and scope equivalent to the scope of the claims.

### DESCRIPTION OF REFERENCE NUMERALS

1: Rolling bearing
2: Outer ring
3: Inner ring
4: Bearing space
5: Rolling element
7: Outer-ring-fixed sealing member
8: Inner-ring-fixed sealing member
11: Seal fixing groove
12: Circumferential groove
15: Seal sliding contact surface
16: Seal fixing surface
21: Seal lip
22: Axial end surface
23: Oil supply gap
24: Protrusion
26: Tubular fitting portion
27: Annular plate portion
28: Bent edge portion
29: Oil discharge gap
50: Rolling bearing
51: Inner member
52: Outer member
53: Rolling element
54: Cage
55: Shield
56: Slinger
58: First raceway surface
60: Second raceway surface
61: Shoulder portion
63: Cutout portion
64: Annular portion
65, 66: Claw portion
67: Space
68: Side surface on the other axial side
69: Recessed end surface
70: First oil port
71: Second oil port
73: Distal end plate portion
74: Radially inner tapered plate portion
77: Tubular plate portion
78: Side plate portion
101: Rotary part
102: Oil supply portion

## Claims

1. A rolling bearing comprising:
an outer ring (2);
an inner ring (3) disposed radially inward of the outer ring (2);
a plurality of rolling elements (5) disposed in an annular bearing space (4) defined between the outer ring (2) and the inner ring (3);
two sealing members (7, 8) covering a first axial end opening and a second axial end opening of the bearing space (4), respectively,
**characterized in that** one of the two sealing members (7, 8) is an outer-ring-fixed sealing member (7) fixed to an inner periphery of the outer ring (2), and the other of the two sealing members (7, 8) is an inner-ring-fixed sealing member (8) fixed to an outer periphery of the inner ring (3),
wherein an oil supply gap (23) for introducing lubricating oil supplied from outside the bearing into the bearing space (4) is defined between an inner periphery of the outer-ring-fixed sealing member (7) and the outer periphery of the inner ring (3); and
wherein an oil discharge gap (29) for discharging lubricating oil from the bearing space (4) is defined between an outer periphery of the inner-ring-fixed sealing member (8) and the inner periphery of the outer ring (2).

2. The rolling bearing according to claim 1, wherein the outer-ring-fixed sealing member (7) includes a rubber seal lip (21) provided with a plurality of protrusions (24) circumferentially spaced apart from each other, the plurality of protrusions (24) being in sliding contact with the outer periphery of the inner ring (3) via an oil film, and
wherein the oil supply gap (23) is defined between each circumferentially adjacent pair of the protrusions (24).

3. The rolling bearing according to claim 2, wherein the outer periphery of the inner ring (3) is formed with a cylindrical seal sliding contact surface (15) extending axially from a portion with which the seal lip (21) is in sliding contact and connecting to an axial end surface (22) of the inner ring (3).

4. The rolling bearing according to claim 3, wherein the outer periphery of the inner ring (3) is formed with a cylindrical seal fixing surface (16) to which a radially inner end of the inner-ring-fixed sealing member (8) is fixedly fitted, and
wherein the seal fixing surface (16) and the seal sliding contact surface (15) are equal in outer diameter and are symmetrical in shape with each other, whereby the inner ring (3) is symmetrical with respect to a plane perpendicular to an axial direction.

5. The rolling bearing according to any one of claims 1 to 4, wherein a metal shield plate that does not come into contact with the inner periphery of the outer ring (2) is used as the inner-ring-fixed sealing member (8).

6. The rolling bearing according to any one of claims 1 to 5, wherein the inner-ring-fixed sealing member (8) includes:
a tubular fitting portion (26) fitted to the outer periphery of the inner ring (3);
an annular plate portion (27) rising radially outward from the tubular fitting portion (26); and
a bent edge portion (28) bent axially inward at a radially outer end of the annular plate portion (27).

7. The rolling bearing according to claim 6, wherein the inner periphery of the outer ring (2) is formed with a circumferential groove (12) extending circumferentially at a position corresponding to the inner-ring-fixed sealing member (8), and
wherein at least a portion of the bent edge portion (28) of the inner-ring-fixed sealing member (8) is received in the circumferential groove (12).

8. The rolling bearing according to claim 7, wherein the inner periphery of the outer ring (2) is formed with a seal fixing groove (11) in which a radially outer end of the outer-ring-fixed sealing member (7) is fixedly fitted, and
wherein a cross-sectional shape of the seal fixing groove (11) and a cross-sectional shape of the circumferential groove (12) are symmetrical with each other, whereby the outer ring (2) is symmetrical with respect to a plane perpendicular to the axial direction.

9. The rolling bearing according to any one of claims 1 to 8, wherein grease is sealed in the bearing space (4).

10. A rolling bearing comprising:
an inner member (51) having a first raceway surface (58);
an outer member (52) having a second raceway surface (60);
a plurality of rolling elements (53) disposed between the first raceway surface (58) and the second raceway surface (60); and
a cage (54) retaining the rolling elements (53),
**characterized in that** the rolling bearing further comprises:
a shield (55) extending relative to a radially inner surface of the outer member (52) toward a radially outer surface of the inner member (51) at a position displaced relative to the rolling elements (53) and the cage (54) toward a first axial side; and
a slinger (56) extending relative to the radially outer surface of the inner member (51) toward the radially inner surface of the outer member (52) at a position displaced relative to the rolling elements (53) and the cage (54) toward a second axial side opposite from the first axial side,
wherein a first oil port (70) is defined between the shield (55) and the inner member (51), and
wherein a second oil port (71) is defined between the slinger (56) and the outer member (52).

11. The rolling bearing according to claim 10, wherein the cage (54) includes an annular portion (64) extending circumferentially on the second axial side of the rolling elements (53), and
wherein the slinger (56) includes a side plate portion (78) axially opposed to, and axially spaced apart from, a side surface (68) of the annular portion (64) on the second axial side.

12. The rolling bearing according to claim 11, wherein the slinger (56) further includes a tubular plate portion (77) fitted to the inner member (51) so as to be radially opposed to the annular portion (64) and be radially spaced apart from the annular portion (64),
wherein the side plate portion (78) extends radially outward from the second axial side of the tubular plate portion (77), and
wherein a radial gap (g1) between the tubular plate portion (77) and the annular portion (64) is smaller than an axial gap (g2) between the side surface (68) of the annular portion (64) on the second axial side and the side plate portion (78).

13. The rolling bearing according to claim 11 or 12, wherein a radial gap (g3) between an outer peripheral edge of the side plate portion (78) and the outer member (52) is larger than the axial gap (g2) between the side surface (68) of the annular portion (64) on the second axial side and the side plate portion (78).

14. The rolling bearing according to claim 13, wherein the outer member (52) includes:
a shoulder portion (61) radially opposed to the annular portion (64) so as to be radially spaced apart from the annular portion (64); and
a cutout portion (63) having a diameter larger than a diameter of the shoulder portion (61) at a position radially opposed to the side plate portion (78), and
wherein the side plate portion (78) has an outer diameter smaller than the diameter of the shoulder portion (61).

15. The rolling bearing according to any one of claims 10 to 14, wherein the shield (55) has an inner diameter not greater than an inner diameter of the cage (54).

16. The rolling bearing according to any one of claims 10 to 15, wherein the cage (54) is located farther from the shield (55) toward the second axial side than the rolling elements (53).

17. The rolling bearing according to any one of claims 10 to 16, wherein the shield (55) includes:
a distal end plate portion (73) that is a portion of the shield (55) closest to the inner member (51); and
a radially inner tapered plate portion (74) extending obliquely radially outward from the first axial side of the distal end plate portion (73).

18. The rolling bearing according to any one of claims 10 to 17, wherein the cage (54) is a resin member including the annular portion (64), which extends circumferentially; and plural pairs of claw portions (65 and 66) extending from the annular portion (64) toward the first axial side so as to define spaces (67) that are open to a radially inner side, a radially outer side and the first axial side,
wherein the rolling elements (53) are balls disposed in the respective spaces (67),
wherein a portion of the cage (54) between two (65 and 66) of the claw portions (65 and 66) that are located between each circumferentially adjacent pairs of the rolling elements (53) is recessed toward the second axial side so as to form a recessed portion, and
wherein inequalities a > b and c > 0 are satisfied, where a represents a minimum axial thickness of a portion of the cage (54) between (i) a recessed end surface (69) located at an axial end of the recessed portion on the second axial side and (ii) the side surface (68) of the cage (54) on the second axial side, b represents an axial thickness of a portion of the cage (54) between (i) a pocket bottom (P) of each of the spaces (67) at an axial end of the space (67) on the second axial side and (ii) the side surface (68) of the cage (54) on the second axial side, and c represents a minimum distance between (i) an imaginary plane passing through centers (O) of the rolling elements (53) and (ii) the recessed end surface (69).

19. A rotary machine comprising:
the rolling bearing (50) according to any one of claims 10 to 18;
a rotary part (101) supported by the rolling bearing (50); and
an oil supply portion (102) for supplying oil to the first axial side of the rolling bearing (50).
